# EUROPEAN PATENT APPLICATION

(11) **EP 4 852 080 A1**
(43) Date of publication of application: **09.12.2026**
(21) Application number: 24928145.2
(22) Date of filing: 14.11.2024
(51) Int. Cl.: H01M 4/36, H01M 4/525, H01M 4/505, H01M 10/0525, H01M 10/0562

(54) **POSITIVE ELECTRODE ACTIVE LAYER COMPOSITION, POSITIVE ELECTRODE ACTIVE COATED PARTICLE, POSITIVE ELECTRODE FILM, SOLID-STATE BATTERY, ELECTRIC DEVICE, AND USE**

(30) Priority: 08.03.2024 CN 202410269632
(71) Applicant: Contemporary Amperex Technology Co., Limited, Ningde, Fujian 352100 (CN)
(72) Inventor: SHAO, Qinong, Ningde, Fujian 352100 (CN); WENG, Wei, Ningde, Fujian 352100 (CN); YANG, Dunjie, Ningde, Fujian 352100 (CN); YANG, Wu, Ningde, Fujian 352100 (CN); ZHANG, Hongtu, Ningde, Fujian 352100 (CN); ZHONG, Chengbin, Ningde, Fujian 352100 (CN); NING, Ziyang, Ningde, Fujian 352100 (CN); HU, Bobing, Ningde, Fujian 352100 (CN)
(74) Representative: Ran, Handong
(86) International application number: PCT/CN2024/132057
(87) International publication number: WO 2025/185216

(57) **Abstract**

The present application relates to a positive electrode active layer composition, a positive electrode active coated particle, a positive electrode film, a solid-state battery, an electric device, and a use. The positive electrode active layer composition comprises positive electrode active coated particles and positive electrode electrolyte particles. Each positive electrode active coated particle comprises a positive electrode active core, and a first coating sub-layer and a second coating sub-layer that coat at least a part of the surface of the positive electrode active core, and the first coating sub-layer is located between the positive electrode active core and the second coating sub-layer. The positive electrode active core comprises an oxide positive electrode active material. The first coating sub-layer comprises a non-carbon conductive material. The second coating sub-layer comprises a solid electrolyte material. At least one of the positive electrode electrolyte particles and the second coating sub-layers comprises a sulfide electrolyte.

## Description

### RELATED APPLICATION

The present application claims priority to Chinese Patent Application CN2024102696321, filed on March 8, 2024 and entitled "POSITIVE ELECTRODE ACTIVE LAYER COMPOSITION, POSITIVE ELECTRODE ACTIVE COATED PARTICLE, POSITIVE ELECTRODE FILM, SOLID-STATE BATTERY, ELECTRICAL APPARATUS, AND USE", which is incorporated herein by reference in its entirety.

### TECHNICAL FIELD

The present application relates to the technical field of solid-state batteries, and further relates to a positive electrode active layer composition, positive electrode active coated particles, a positive electrode film, a solid-state battery, an electrical apparatus, and use thereof.

### BACKGROUND

The statements here are provided only as background information related to the present application and do not necessarily constitute prior art.

In solid-state batteries, non-flammable solid electrolytes are adopted to replace organic electrolyte solutions in traditional liquid secondary batteries, greatly improving battery safety. They are considered the next-generation batteries closest to commercialization. However, poor interfacial contact and interfacial side reactions of the solid-state batteries are one of the key issues limiting their performance, resulting in dissatisfactory discharge capacity, rate performance, and cycle performance of the batteries.

### SUMMARY OF THE INVENTION

According to various implementation modes and various embodiments of the present application, the present application provides a positive electrode active layer composition, positive electrode active coated particles, a positive electrode film, a solid-state battery, an electrical apparatus, and application. The positive electrode active layer composition can be configured to form a positive electrode active material layer in the positive electrode film or a positive electrode layer in the solid-state battery; and the solid-state battery prepared from the positive electrode active layer composition achieves good discharge capacity, rate performance and cycle performance.

In a first aspect, the present application provides the positive electrode active layer composition.

In some embodiments, the positive electrode active layer composition is provided and includes the positive electrode active coated particles and positive electrode electrolyte particles; each positive electrode active coated particle includes a positive electrode active body, and a first coating sub-layer and a second coating sub-layer which coat at least part of a surface of the positive electrode active body; the first coating sub-layers are located between the positive electrode active bodies and the second coating sub-layers; the positive electrode active bodies include oxide positive electrode active substances; the first coating sub-layers include non-carbon conductive substances; the second coating sub-layers include electrolyte solids; and at least one of the positive electrode electrolyte particles and the second coating sub-layers contain a sulfide electrolytes.

In some embodiments, the positive electrode active layer composition is provided and includes the positive electrode active coated particles and the positive electrode electrolyte particles;
the positive electrode active coated particles include positive electrode active bodies and coating layers coating at least part of the surfaces of the positive electrode active bodies; the coating layers include first coating sub-layers and second coating sub-layers; the second coating sub-layers are located on the surfaces of the sides, far away from the positive electrode active bodies, of the first coating sub-layers;
the positive electrode active bodies include the positive electrode active substances, and the positive electrode active substances include the oxide positive electrode active substances;
the first coating sub-layers include the non-carbon conductive substances, the non-carbon conductive substances include at least one of elemental Se, elemental Te, and a Se/Te compound, the Se/Te compound has a chemical formula of SeₓTe₁₋ₓ, 0<x<1;
the second coating sub-layers include the electrolyte solids; and
at least one of the positive electrode electrolyte particles and the second coating sub-layers includes the sulfide electrolytes.

The positive electrode active layer composition includes the positive electrode active coated particles that are of a multi-layer coated structure, and also includes the positive electrode electrolyte particles, in which, the positive electrode active bodies containing the oxide positive electrode active substances (such as lithium transition metal oxides) are inner cores of the positive electrode active coated particles; the first coating sub-layers containing the non-carbon conductive substances and the second coating sub-layers containing the electrolyte solids are arranged on the surfaces of the positive electrode active bodies in sequence; at least one of the positive electrode electrolyte particles and the second coating sub-layers contains sulfide electrolyte components, namely, the oxide positive electrode active substances (such as the lithium transition metal oxides) in the positive electrode active coated particles are separated from the sulfide electrolytes in the positive electrode active layer composition by at least the first coating sub-layers; the sulfide electrolytes in the positive electrode active layer composition can be located in the positive electrode electrolyte particles or in the second coating sub-layers of the positive electrode active coated particles.

The non-carbon conductive substances in the first coating sub-layers include first conductive substances; the first conductive substances are at least one of elemental Se, elemental Te, and Se/Te compound, and consists of one or both of selenium (Se) element and tellurium (Te) element. The elemental Se and the elemental Te both have high electronic conductivity, the electronic conductivity of the elemental Se is about 10 mS/cm, and the electronic conductivity of the elemental Te is about 2,000 mS/cm, such that the non-carbon conductive substances can provide high electronic conductivity and can be used in the positive electrode film or the positive electrode layer of the solid-state battery. In an electrochemical operating window (such as 2.8-4.3 V) of the oxide positive electrode active substances (such as the lithium transition metal oxides), selenium (Se) and tellurium (Te) show almost no electrochemical activity, contribute virtually no capacity, and basically do not participate in electrochemical reactions, thereby maintaining stable electronic conductivity. In addition, the Se and Te elements are in the same group as the sulfur (S) element and have good compatibility with the sulfide electrolytes.

Due to the separation effect of the first conductive substances in the first coating sub-layers on the oxide positive electrode active substances (such as the lithium transition metal oxides) and the sulfide electrolytes, direct contact and interface side reaction between the oxide positive electrode active substances (such as the lithium transition metal oxides) and the sulfide electrolytes can be reduced or blocked. Peroxide ions (O₂²⁻) or oxygen free radicals generated by charging to a high voltage can react with Se and/or Te in the non-carbon conductive substances to generate SeO₃²⁻ and/or TeO₃²⁻, and such reaction can inhibit oxygen release of the oxide positive electrode active substances (such as the lithium transition metal oxides), thereby reducing oxygenolysis of the sulfide electrolytes and improving the structural stability of the positive electrode active particles as well as the electrochemical performance of the battery; and the prepared solid-state battery can achieve high discharge capacity, rate performance, and cycle performance at the same time.

The second coating sub-layers are further arranged in the positive electrode active particles provided with the first coating sub-layers; due to the ion conduction capability provided by the electrolyte solids in the second coating sub-layers, the interface contact between the positive electrode active substances and the positive electrode electrolyte particles can be improved, thereby improving the ion conduction between the positive electrode active coated particles and the positive electrode electrolyte particles, reducing the interface impedance and improving the battery performance.

The first coating sub-layers can provide high electronic conductivity, and the electrolyte solids in the second coating sub-layers can improve the interface ion transmission, such that the positive electrode active layer composition achieves high electronic conductivity and good ion conduction performance at the same time; and by means of such structural design, oxygen release of the oxide positive electrode active substances (such as the lithium transition metal oxides) can be inhibited, the corresponding solid-state battery will have high discharge capacity and rate performance, and moreover, the cycle performance of the solid-state battery can be improved.

By multiple synergistic effects between solid-state coated positive electrode particles and the positive electrode electrolyte particles, a good and stable electric contact network can be formed in the positive electrode active material layer, thus the interface impedance can be reduced, the charge transfer efficiency between the positive electrode active substances and the outside as well as full release of the capacity of the positive electrode active substances can be promoted; and the positive electrode active layer composition can be configured to prepare the solid-state battery with high discharge capacity, rate performance and cycle performance.

In some embodiments, the electronic conductivity of the non-carbon conductive substances under at least one temperature of 20-100°C or within at least part of temperature range is greater than or equal to that of elemental Se.

In some embodiments, the weight percentage of the Te element in the non-carbon conductive substances is 50-100wt%, optionally, 60-100wt%.

The elemental Te has high electronic conductivity (about 2,000 mS/cm), can achieve the electronic conductivity which is basically the same as that of a traditional carbon black material (for example, the electronic conductivity of carbon black is about 10-100 S/cm), and can provide good electronic conductivity. By arranging the Te element in a more proportion in the non-carbon conductive substances, the solid-state battery with higher discharge capacity, rate performance and cycle performance can be prepared.

"At least one of the elemental Te, elemental Te, and Se/Te compound" is recorded as first conductive substances. In some embodiments, the weight percentage of the first conductive substances in the non-carbon conductive substances is 80-100wt%, optionally, 90-100wt%.

By controlling the weight percentage of the first conductive substances in the non-carbon conductive substances within the above-mentioned range, the effect of the first conductive substances on inhibiting the oxygen release of the positive electrode active substances (such as the lithium transition metal oxides) can be better exerted, and therefore, the solid-state battery with higher discharge capacity, rate performance and cycle performance can be prepared.

In some embodiments, the positive electrode active coated particles meet one or more of the following characteristics:
the weight percentage of the first coating sub-layers in the positive electrode active coated particles is 0.1-10wt%, optionally, 0.5-5wt%;
the weight percentage of the non-carbon conductive substances in the first coating sub-layers is 80-100wt%, optionally, 90-100wt%; and
a thickness of the first coating sub-layers is 0.1-50 nm, optionally, 0.5-10 nm.

By adjusting at least one of the weight percentage of the first coating sub-layers in the positive electrode active coated particles, the weight percentage of the non-carbon conductive substances in the first coating sub-layers, and the thickness of the first coating sub-layers within the above-mentioned range, the structural stability of the positive electrode active substances can be improved while a good and stable electric contact network is formed and the interface impedance is reduced, and moreover, the solid-state battery can achieve high discharge capacity, rate performance and cycle performance.

In some embodiments, the sulfide electrolytes include one or more of argyrodite type sulfide electrolytes, LGPS sulfide electrolytes, and lithium-sulfur phosphorus pentasulfide composite type sulfide electrolytes.

In some embodiments, the sulfide electrolytes meet one or more of the following characteristics:
the argyrodite type sulfide electrolytes include the sulfide electrolytes with the chemical formula of Li_{6±s}P₁₋ⱼAⱼS_{5±s-t}BₜX_{1±s}, in which, 0≤j<1, 0≤t<1, 0≤s<1, A is selected from one or more elements of Ge, Si, Sn and Sb, B is selected from one or more elements of Te, and X is selected from one or more elements of Cl, Br, I and F;
the LGPS sulfide electrolytes include the sulfide electrolytes with the chemical formula of Li_{10±δ5}Ge_{1-g}G_{g}P_{2-q}Q_{q}S_{12-w}W_{w}, in which, 0≤δ5<1, 0≤g≤1, 0≤q≤2, 0≤w<1, G is one or both of elements Si and Sn, Q is Sb, and W is selected from one or more elements of O, Se, Te, Cl, Br, I and F; and
the lithium-sulfur phosphorus pentasulfide composite type sulfide electrolytes include the sulfide electrolytes with the chemical formula of (100-u-v)Li₂S·uP₂S₅·vMₘNₙ, in which, 0<u<100, 0≤v<100, 0≤u+v<100, 0≤m<4, 0≤n<6, M is selected from one or more elements of Li, B, Ge, Si, Sn and Sb, and N is selected from one or more elements of S, Se, Te, O, Cl, Br, I and F.

If at least one of the positive electrolyte particles in the positive electrode layer of the solid-state battery and the second coating sub-layers includes various above-mentioned sulfide electrolytes, the oxidative decomposition of the sulfide electrolytes at a positive electrode under high voltage can be inhibited by the multi-layer coated structure design of the positive electrode active coated particles, furthermore, the discharge capacity, rate performance and cycle performance of the solid-state battery are improved, and in addition, the initial Coulombic efficiency of the solid-state battery can be improved.

In some embodiments, the positive electrode active coated particles meet one or more of the following characteristics:
the weight percentage of the second coating sub-layers in the positive electrode active coated particles is 0.1-10wt%, optionally, 0.5-5wt%;
the weight percentage of the electrolyte solids in the second coating sub-layers is 50-100wt%, optionally, 80-100wt%, further optionally, 90-100wt%;
the electrolyte solids include sulfide-based electrolytes, and the weight percentage of the sulfide-based electrolytes in the electrolyte solids is 50-100wt%, optionally, 80-100wt%, further optionally, 90-100wt%; and
the thickness of the second coating sub-layers is 0.1-50 nm, optionally, 0.5-10 nm.

By adjusting at least one parameter of the weight percentage of the second coating sub-layers in the positive electrode active coated particles, the weight percentage of the electrolyte solids in the second coating sub-layers and the thickness of the second coating sub-layers within the above-mentioned range, a good and stable electric contact network can be formed, while the interface impedance can be better reduced, and furthermore, the solid-state battery can achieve higher discharge capacity, rate performance and cycle performance.

In some embodiments, the positive electrode active layer composition meets any one of the following conditions:
the positive electrode electrolyte particles and the second coating sub-layers both contain the sulfide electrolytes; and
one of the positive electrode electrolyte particles and the second coating sub-layers contains the sulfide electrolytes, and the other one is optional solid electrolytes.

In some embodiments, one of the positive electrode electrolyte particles and the second coating sub-layers contains the sulfide electrolytes, and the other one contains one or more selected from the group consisting of sulfide electrolytes, halide electrolytes, oxide electrolytes, and polymer electrolytes.

The sulfide electrolytes can be arranged in the second coating sub-layers of the positive electrode active coated particles, can also be arranged in the positive electrode electrolyte particles, and can also be arranged at both positions. If one of the positive electrode electrolyte particle sand the second coating sub-layers is provided with the sulfide electrolytes, the type of the solid electrolytes in the other one can be not specially limited and can be flexibly selected according to requirements.

In some embodiments, the second coating sub-layers contain the sulfide electrolytes.

By arranging the sulfide electrolytes in the second coating sub-layers of the positive electrode active coated particles, the positive electrode active particles will have high ion conduction capability, such that the interfacial ion conduction can be greatly improved, and the electrochemical performance of the battery is improved.

In some embodiments, the positive electrode active layer composition meets one or more of the following characteristics:
the second coating sub-layers include the sulfide-based electrolytes, and the weight percentage of the sulfide-based electrolytes in the second coating sub-layers is 80-100wt%, optionally, 90-100wt%; and
the positive electrode electrolyte particles include the sulfide-based electrolytes, and the weight percentage of the sulfide-based electrolytes in the positive electrode electrolyte particles is 80-100wt%, optionally, 90-100wt%.

By controlling at least one parameter of the weight percentage of the sulfide-based electrolytes in the second coating sub-layers and the weight percentage of the sulfide-based electrolytes in the positive electrode electrolyte particles within the above-mentioned range, the ion transmission of the positive electrode active material layer can be better improved, and furthermore, the interface impedance in the positive electrode active material layers is more favorably reduced.

In some embodiments, the mass ratio of the positive electrode electrolyte particles to the positive electrode active coated particles is 1-67%, optionally, 1-45%, optionally, 5-25%.

By controlling the mass ratio of the positive electrode electrolyte particles to the positive electrode active coated particles within the above-mentioned range, the overall electron and ion conduction capability can be better provided, and high energy is can be achieved at the same time.

In some embodiments, the oxide positive electrode active substances include the lithium transition metal oxides;
optionally, the lithium transition metal oxides include one or more of a lithium cobaltate type positive electrode active substance, a high-nickel positive electrode active substance, a lithium-rich manganese-based positive electrode active substance, and a modification form of any one of the above-mentioned positive electrode active substances; and the modification form includes one or more of doping modification and coating modification;
in which,
the lithium cobalt oxide type positive electrode active substance includes an element Li, an element Co, and an element O, in which, an atom molar ratio of the element Co to the element O is x2:2, and 0.9≤x2≤1; optionally, the lithium cobalt oxide type positive electrode active substance includes the element Li, the element Co and the element O, in which, the atom molar ratio of the element Li to the element Co to the element O is 1:x2:2, and 0.9≤x2≤1;
the high-nickel positive electrode active substance includes the element Li, the element Ni, and the element O, in which, the atom molar ratio of the element Ni to the element O is y2:2, and 0.6≤y2≤1; optionally, the high-nickel positive electrode active substance includes the element Li, the element Ni and the element O, in which, the atom molar ratio of the element Li to the element Ni to the element O is 1:y2:2, and 0.6≤y2≤1, optionally, 0.8≤y2≤1;
the lithium-rich manganese-based positive electrode active substance includes the element Li, the element Mn, and the element O, in which, the atom molar ratio of the element Li to the element Mn to the element O is (1+p):(p+r(1-p)):(2+p), and 0<p≤1, 0≤r≤1, optionally, 0.2≤p≤1.

In some embodiments, the lithium transition metal oxides meet one or more of the following characteristics:
the lithium cobalt oxide type positive electrode active material includes the lithium transition metal oxides with the chemical formula of LiCoₓ₂R₁₋ₓ₂O₂, in which, R is selected from one or more of Ni, Mg, Ti, Al, Cr, Nb, Fe and O;
the high-nickel positive electrode active material includes the lithium transition metal oxides with the chemical formula of LiNi_{y2}Co_{z2}D_{1-y2-z2}O₂, and 0≤z2≤0.4, 0.6≤(y2+z2)≤1, in which, D is selected from one or more of Mn, Al, Zr, Ti, Ce, Nb, Mo, Ta and W; and optionally, D includes the element M; and
the lithium-rich manganese-based positive electrode active substance includes the lithium transition metal oxides with the chemical formula of pLi₂MnO₃·(1-p)LiZO₂, and Z is selected from one or more elements of Ni, Co, Mn, Cr, Fe, Al, Nb, Mo and Ru.

As an optional example of the oxide positive electrode active substances, the lithium transition metal oxides such as the lithium cobalt oxide type positive electrode active substance, the high-nickel positive electrode active substance, and the lithium-rich manganese-based positive electrode active substance easily release oxygen under high working voltage, and if the lithium transition metal oxides are used as the positive electrode active substances in the positive electrode active particles, the positive electrode active layer composition can be arranged in the positive electrode active material layer, such that high energy density and long cycle performance of the solid-state battery can be realized while the positive electrode releases oxygen.

If the positive electrode active material layer includes the above-mentioned positive electrode active coated particles, the oxygen release of the positive electrode material can be further inhibited, the crystal structure stability of the positive electrode active particles during battery cycle can be improved, the generation of a surface rock salt phase is inhibited, the positive electrode capacity is fully exerted, and the long-cycle performance of the battery is improved.

In some embodiments, the oxide positive electrode active substances include one or more selected from the group consisting of lithium-cobalt oxides, lithium-nickel oxides, lithium-manganese oxides, lithium-nickel-cobalt oxides, lithium-manganese-cobalt oxides, lithium-nickel-manganese oxides, lithium-nickel-cobalt-manganese oxides, lithium-nickel-cobalt-aluminum oxides, lithium-rich manganese positive electrode active substances, and any one of above lithium transition metal oxides in modification forms; the lithium-rich manganese positive electrode active substances have a chemical formula of pLi₂MnO₃·(1-p)LiZO₂, Z is one or more elements selected from the group consisting of Ni, Co, Mn, Cr, Fe, Al, Nb, Mo, and Ru, 0<p≤1; and the modification forms include one or more of doping modification and coating modification.

By means of the structural design of introducing the positive electrode active coated particles in the positive electrode active particles containing different types of above-mentioned oxide positive electrode active substances (such as the lithium transition metal oxides), the effects of improving the discharge capacity, rate performance and cycle performance of the solid-state battery can be achieved.

In some embodiments, the Dᵥ50 or particle size of the positive electrode electrolyte particles is 1 nm - 20 µm, optionally, 50 nm - 5 µm; Dᵥ50 represents the particle size corresponding to the cumulative volume distribution of the multi-particle mixture reaching 50%, and the particle size refers to the maximum diameter of the particle in any direction.

By adjusting Dᵥ50 or particle size of the positive electrode electrolyte particles within above-mentioned range, the interface contact between the positive electrode layer and a battery layer is better improved while the overall ion conduction capability of the positive electrode electrolyte particles is achieved, furthermore, the electrochemical performance of the battery is better improved, and the manufacturing cost can be controlled. The relatively small particle size of the positive electrode electrolyte particles is conducive to improving the electric contact between the positive electrode active substances in the positive electrode active particles, and thus the capacity of the solid-state battery can be promoted to be exerted and the rate performance can be improved. The positive electrode electrolyte particles with the relatively moderate Dᵥ50 or particle sizes are easier to manufacture.

In some embodiments, Dᵥ50 or particle size of the positive electrode active coated particles or is 0.1-20 µm, and optionally, 1-10 µm; and the Dᵥ50 represents the particle size corresponding to the cumulative volume distribution percentage of a multi-particle mixture reaching 50%.

By controlling the Dᵥ50 or particle size of the positive electrode active coated particles within the above-mentioned range, the discharge capacity of the positive electrode active substances can be improved, and good contact between the positive electrode active substances in a composite positive electrode and the sulfide-based electrolytes can be kept. Ion transmission paths in the positive electrode active substances with smaller sizes are shorter, which is conducive to improving the discharge capacity of the positive electrode active substances; and the positive electrode active substances with larger sizes can be better coated with the sulfide-based electrolytes, so that the interface contact with the sulfide solid electrolytes is better, and the cycle performance of the battery is facilitated. The positive electrode materials with relatively moderate sizes can enable the solid-state battery to have high discharge capacity and excellent cycle performance.

In a second aspect, the present application provide the positive electrode active coated particles, which the positive electrode active coated particles in the positive electrode active layer composition described in the first aspect of the present application, and the second coating sub-layers contain the sulfide electrolytes.

The positive electrode active coated particles can be applied to the positive electrode active material layer of the solid-state battery, such that the corresponding sulfide solid-state battery has good discharge capacity, rate performance and cycle performance.

In a third aspect, the present application provides the positive electrode film.

In some embodiments, a positive electrode film is provided and includes a positive electrode current collector and a positive electrode active material layer located on at least one side of the positive electrode current collector, and the positive electrode active material layer includes the positive electrode active layer composition described in the first aspect of the present application.

In some embodiments, the positive electrode film is provided and includes a positive electrode current collector and a positive electrode active material layer located on at least one side of the positive electrode current collector, and the positive electrode active material layer includes the positive electrode active coated particles described in the second aspect of the present application.

In some embodiments, the positive electrode active material layer meets one or more of the following characteristics:
the weight percentage of the positive electrode active coated particles in the positive electrode active material layer is 70-99wt%, optionally, 80-95wt%; and
the weight percentage of the positive electrode electrolyte particles in the positive electrode active material layer is 0.1-30wt%, optionally, 5-20wt%.

By controlling the weight percentage of the positive electrode active coated particles in the positive electrode active material layer within the above-mentioned range, both the high energy density and cycle stability can be achieved.

By controlling the weight percentage of the positive electrode electrolyte particles in the positive electrode active material layer within the above-mentioned range, better integral ion conduction capability can be provided.

In some embodiments, the positive electrode active material layer further includes one or both of a binder and a conductive agent;
optionally, the positive electrode film meets one or more of the following characteristics:
the weight percentage of the binder in the positive electrode active material layer is 0.1wt%-5wt%; and
the weight percentage of the conducive agent in the positive electrode active material layer is 0.1wt%-5wt%.

In a fourth aspect, the present application provides a solid-state battery, including a positive electrode layer, a solid electrolyte layer, and a negative electrode layer;
the positive electrode layer includes at least one of the positive electrode active layer composition described in the first aspect of the present application, the positive electrode active coated particles described in the second aspect of the present application, and the positive electrode film described in the third aspect of the present application.

In some embodiments, the solid-state battery is the sulfide solid-state battery.

In some embodiments, the solid-state battery is a sulfide all-solid-state battery.

In a fifth aspect, the present application provides an electrical apparatus, which includes the positive electrode film described in the third aspect of the present application and the solid-state battery described in the fourth aspect of the present application.

An application of the positive electrode active layer composition described in the first aspect of the present application, or the positive electrode active coated particles described in the second aspect of the present application, or the positive electrode film described in the third aspect of the present application in preparation of the solid-state battery is provided;
optionally, the solid-state battery is the sulfide solid-state battery; and
further optionally, the solid-state battery is a sulfide all-solid-state battery.

Details of one or more embodiments of this application will be provided in the accompanying drawings and descriptions below. Other features, objectives, and advantages of the present application will become apparent from the specification, drawings, and claims.

### BRIEF DESCRIPTION OF THE DRAWINGS

In order to better describe and illustrate the embodiments or examples provided in the present application, reference may be made to one or more drawings. The additional details or examples used to describe the drawings should not be considered as limiting the scope of the disclosed applications, currently described embodiments or examples, and any one of currently understood preferred embodiments of these applications. Moreover, in all of the figures, identical parts are represented by identical reference numerals. In the accompanying drawings:

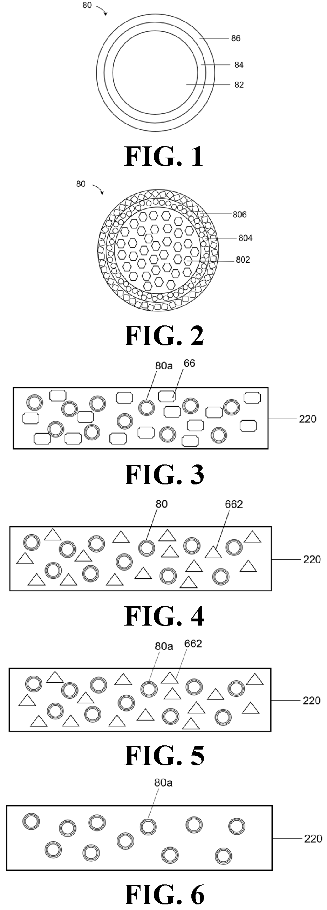

FIG. 1 is a schematic structural diagram of positive electrode active coated particles in an embodiment of the present application, the positive electrode active coated particles include positive electrode active bodies, and first coating sub-layers and second coating sub-layers which located on the surfaces of the positive electrode active bodies, and the second coating sub-layers are located on the surfaces of the sides, away from the positive electrode active bodies, of the first coating sub-layers (namely, the first coating sub-layers are located between the positive electrode active bodies and the second coating sub-layers).
FIG. 2 is a schematic structural diagram of positive electrode active coated particles in an embodiment of the present application, the positive electrode active coated particles include positive electrode active bodies, and first coating sub-layers and second coating sub-layers which are located on the surfaces of the positive electrode active bodies, the first coating sub-layers are located between the positive electrode active bodies and the second coating sub-layers, the positive electrode active bodies include oxide positive electrode active substances, the first coating sub-layers include non-carbon conductive substances, and the second coating sub-layers include electrolyte solids.
FIG. 3 is a composition schematic diagram of a positive electrode active layer composition suitable for preparing a positive electrode active material layer in an embodiment of the present application, the positive electrode active layer composition includes positive electrode active coated particles and positive electrode electrolyte particles, in which, second coating sub-layers of the positive electrode active coated particles contain sulfide electrolytes.
FIG. 4 is a composition schematic diagram of a positive electrode active layer composition suitable for preparing a positive electrode active material layer in an embodiment of the present application, the positive electrode active layer composition includes positive electrode active coated particles and sulfide-based electrolytes.
FIG. 5 is a composition schematic diagram of a positive electrode active layer composition suitable for preparing a positive electrode active material layer in an embodiment of the present application, the positive electrode active layer composition includes positive electrode active coated particles and sulfide-based electrolytes, in which, second coating sub-layers of the positive electrode active coated particles contain sulfide electrolytes and the sulfide-based electrolytes also contain sulfide electrolytes.
FIG. 6 is a composition schematic diagram of a positive electrode active layer composition suitable for preparing a positive electrode active material layer in an embodiment of the present application, the positive electrode active layer composition includes positive electrode active coated particles, in which, second coating sub-layers of the positive electrode active coated particles contain sulfide electrolytes.

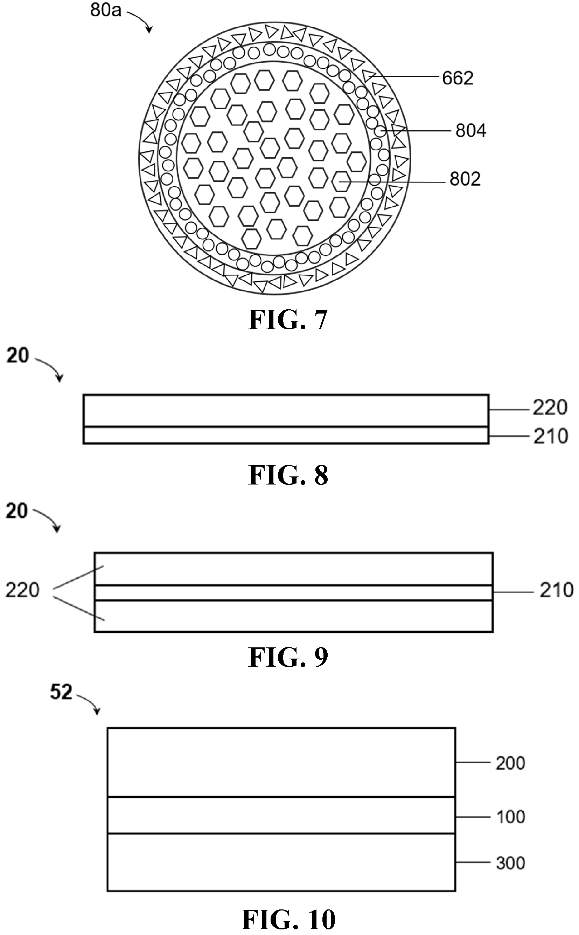

FIG. 7 is a schematic structural diagram of "positive electrode active particles with second coating sub-layers containing sulfide electrolytes" in an embodiment of the present application, the second coating sub-layers of the positive electrode active coated particles contain sulfide electrolytes (namely the second coating sub-layers contain sulfide-based electrolytes), positive electrode active bodies include oxide positive electrode active substances and first coating sub-layers include non-carbon conductive substances.
FIG. 8 is a schematic structural diagram of a positive electrode film according to one embodiment of the present application, the positive electrode film including a positive electrode current collector and a positive electrode active material layer located on one side of the positive electrode current collector.
FIG. 9 is a schematic structural diagram of a positive electrode film according to one embodiment of the present application, the positive electrode film including a positive electrode current collector and positive electrode active material layers located on both sides of the positive electrode current collector.
FIG. 10 is a schematic structural diagram of a solid-state cell according to one embodiment of the present application, the solid-state cell including a positive electrode layer, a solid electrolyte layer, and a negative electrode layer which are stacked in sequence;

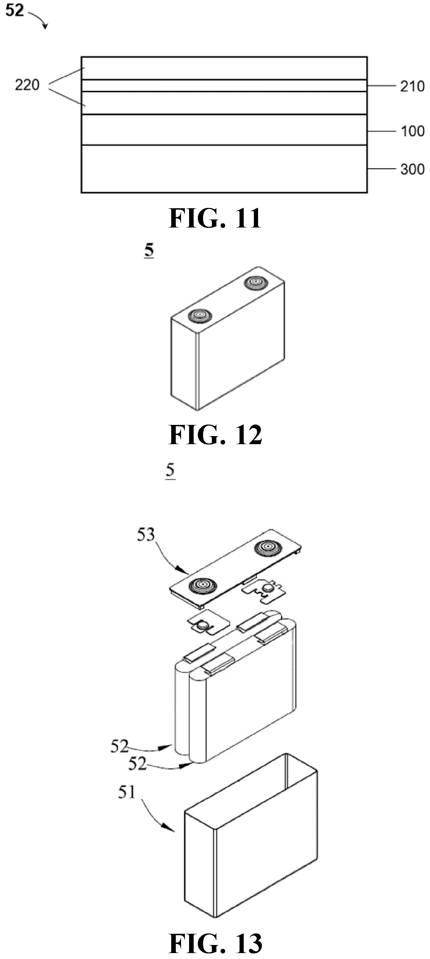

FIG. 11 is a schematic structural diagram of a solid-state cell shown in FIG. 10 according to one embodiment, the solid-state cell including a positive electrode layer, a solid electrolyte layer, and a negative electrode layer which are stacked in sequence, in which, the positive electrode layer includes the positive electrode film in one embodiment of the present application, the positive electrode film includes a positive electrode current collector and positive electrode active material layers positioned on both sides of the positive electrode current collector, and the positive electrode active material layers are arranged between the positive electrode current collector and the solid electrolyte layer.
FIG. 12 is a schematic diagram of a solid-state battery cell according to one embodiment of the present application.
FIG. 13 is a decomposition diagram of a solid-state battery cell according to one embodiment of the present application shown in FIG. 12.

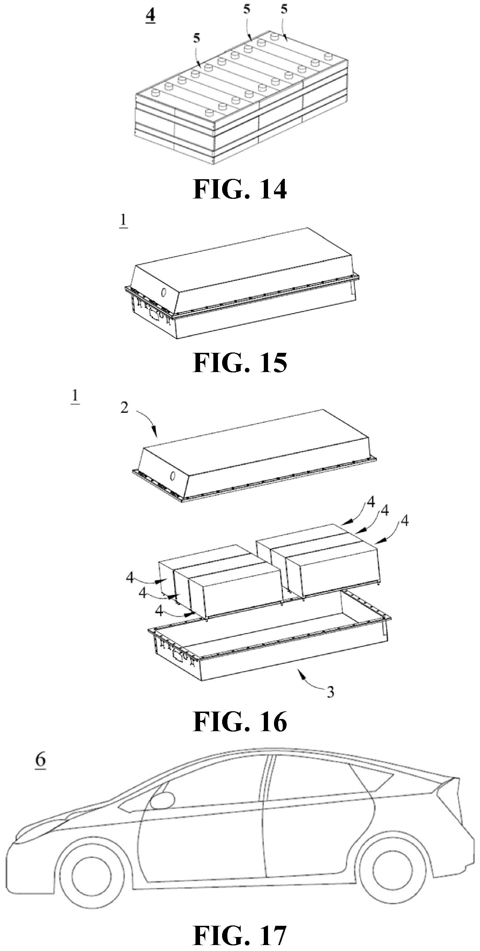

FIG. 14 is a schematic diagram of a battery module according to one embodiment of the present application.
FIG. 15 is a schematic diagram of a battery pack according to one embodiment of the present application.
FIG. 16 is a decomposition diagram of a battery pack according to one embodiment of the present application shown in FIG. 15.
FIG. 17 is a schematic diagram of an electrical apparatus using a solid-state battery as a power supply according to one embodiment of the present application.

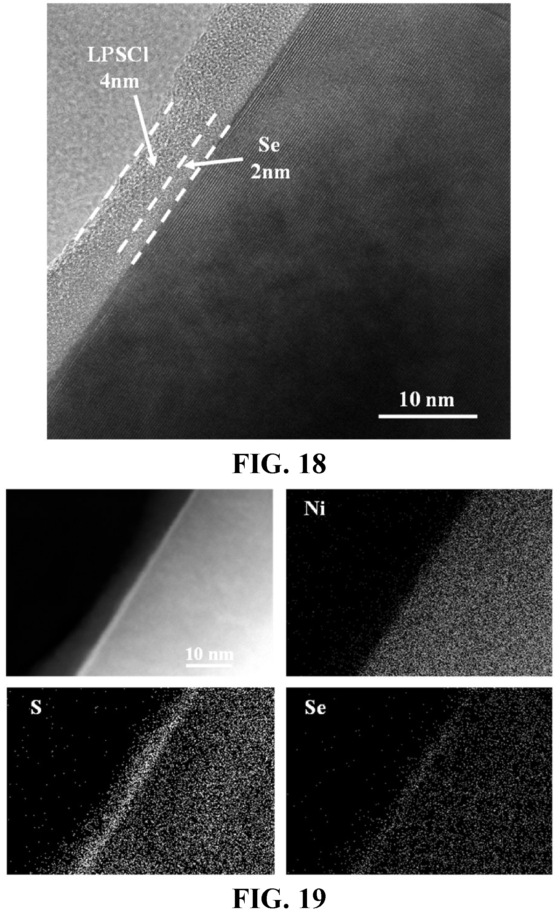

FIG. 18 is a diagram of positive electrode active coated particles prepared by a method of the present application under a transmission electron microscope (TEM), the positive electrode active coated particles shown in the figure include two coating sub-layers, first coating sub-layers are composed of an Se element and are about 2 nm in thickness, second coating sub-layers are composed of LPSCl and are about 4 nm in thickness, and the positive electrode active coated particles are also recorded as "double-layer coated NCM811@Se@LPSCl".
FIG. 19 shows EDS energy spectrum data of positive electrode active coated particles (double-layer coated NCM811@Se@LPSCl) shown in FIG. 18, respectively showing a high-angle annular dark field (HAADF) diagram and corresponding energy spectrum scanning results of an Ni element, an S element, and an Se element.

Reference numerals:
80, positive electrode active coated particle; 82, positive electrode active body; 84, first coating sub-layer; 86, second coating sub-layer; 802, oxide positive electrode active substance; 804, non-carbon conductive substance; 806, electrolyte solid; 662, sulfide-based electrolyte; 80a, positive electrode active coated particle with second coating sub-layer containing sulfide electrolyte; 200, positive electrode layer; 20, positive electrode film; 210, positive electrode current collector; 220, positive electrode active material layer; 66, positive electrode electrolyte particle; 100, solid electrolyte layer; 300, negative electrode layer; 1, battery pack; 2, upper box body; 3, lower box body; 4, battery module; 5, solid-state battery cell; 51, case; 52, solid-state cell; 53, cover plate; and 6, electrical apparatus.

It is to be understood that, in each figure, the drawing dimensions of structures such as the solid-state cell 52, the positive electrode film 20, the positive electrode current collector 210, the positive electrode active material layer 220, the positive electrode layer 200, the positive electrode active material layer 220, the solid electrolyte layer 100, and the negative electrode layer 300 do not represent the actual dimensions; in each figure, the shapes and sizes of substances or partial structures of substances, such as the positive electrode active coated particles 80, the positive electrode active coated particles 80a with second coating sub-layer containing sulfide electrolyte, the positive electrode active bodies 82, the first coating sub-layer 84, the second coating sub-layer 86, the oxide positive electrode active material 802, the non-carbon conductive substance 804, the electrolyte solid 806, the positive electrode electrolyte particles 66, and the sulfide-based electrolyte 662, do not represent or are not intended to limit the actual shapes and sizes of the substances, and the illustrated quantities do not represent or are not intended to limit the actual quantities and quantity ratios.

### DETAILED DESCRIPTION

Some embodiments of a positive electrode active layer composition, a positive electrode active coated particles, a positive electrode film, a solid-state battery, an electrical apparatus and application in the present application are described in detail with appropriate reference to the accompanying drawings below. However, unnecessary detailed descriptions may be omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "range" disclosed in the present application is defined in the form of a lower limit and an upper limit, a given range is defined by selection of a lower limit and an upper limit, and the selected lower limit and upper limit define boundaries of the particular range. A range defined in this way may be inclusive or exclusive of end values, any one of which may be independently included or excluded, and may be combined in any way, that is, any lower limit may be combined with any upper limit to form a range. For example, if ranges of 60-120 and 80-110 are listed for a particular parameter, it is to be understood that the ranges of 60-110 and 80-120 are also expected. In addition, if the minimum range values 1 and 2 are listed, and if the maximum range values 3, 4 and 5 are listed, the following ranges can be all expected: 1-3, 1-4, 1-5, 2-3, 2-4 and 2-5. In the present application, unless otherwise specified, the numerical range "a-b" represents an abbreviated representation of any combination of real numbers between a and b, in which, both a and b are real numbers. For example, the numerical range "0-5" means that all the real numbers between "0-5" have been enumerated herein, and "0-5" is just an abbreviated representation of combinations of these numerical values. In addition, when a parameter is expressed as an integer greater than or equal to 2, it is equivalent to enumerating that the parameter is, for example, an integer of 2, 3, 4, 5, 6, 7, 8, 9, 10, 11, 12, or the like. For example, if a certain parameter is an integer selected from "2-10", it corresponds to listing the integers 2, 3, 4, 5, 6, 7, 8, 9, and 10.

In the present application, unless otherwise specified, "about" indicates a reasonable range of fluctuation around the given number, and the fluctuation range may vary depending on the type and magnitude of the number. For example, it may be within a range of ±10%, ±5%, ±2%, ±1%, etc. For example, by taking "about 20°C" with a tolerance of ±1°C, approximate numbers such as 19°C or 19.5°C within the approximate number range shown as "about 20°C" should also be included in the scope indicated by "about 20°C".

In the present application, terms such as "multiple", "various", "several", and "a number of", unless specifically limited, refer to quantities greater than or equal to 2. For example, "one or more" means one or at least two (more than or equal to). It is to be understood that in a case of referring to "any number of" items, it refers to a combination of any suitable number of items, that is, a combination of "any number of" items in a manner that does not conflict and can be implemented according to the present application.

Unless otherwise specified, all embodiments of the present application and optional embodiments may be combined with each other to form a new technical solution.

Reference herein to an "embodiment" means that a particular feature, structure, or property described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments. The "implementation" mentioned herein is understood similarly.

Those skilled in the art can understand that in the methods of various implementation modes or embodiments, the order in which the steps are written does not imply a strict execution sequence nor impose any limitation on the implementation process, and the detailed order of execution of each step should be determined according to its function and possible inherent logic. Unless otherwise specified, all steps in the present application can be performed sequentially or randomly, with a preference for sequential execution. For example, a method M includes steps (a) and (b), indicating that the method may include steps (a) and (b) performed in sequence, or steps (b) and (a) performed in sequence. For example, the method M may also include step (c), indicating that step (c) can be added to method M in any order, for example, the method M may include steps (a), (b), and (c), or steps (a), (c), and (b), or steps (c), (a), and (b), and so on.

In the present application, for open-ended technical features or technical solutions described with words such as "has/have", "contain", or "include", unless otherwise specified, the inclusion of additional members beyond those listed is not excluded. They can be considered as providing a closed feature or solution composed of the listed members, as well as an open-ended feature or solution that includes additional members beyond those listed. For example, if A includes a1, a2, and a3, unless otherwise specified, it may also include other members or may not include additional members. This can be considered as providing both the feature and solution in which "A consists of a1, a2, and a3" or "A is selected from a1, a2, and a3", as well as the feature or solution in which "A includes not only a1, a2, and a3, but also other members".

In the present application, unless otherwise stated, A (such as B) means that B is a nonlimiting example of A and it is to be understood that A is not limited to B.

In the present application, the "optionally" and "optional" mean dispensable, that is, they mean any one selected from two parallel solutions of "presence" or "absence." If there are a plurality of instances of "optional" in a technical solution, unless otherwise specified, and there are no contradictions or interdependencies, each "optional" is independent. Unless otherwise stated, in the present application, descriptions such as "optionally include" or "optionally contain", taking "optionally include" as an example, it means "may include or may not include".

In the present application, unless otherwise stated, features or solutions corresponding the term "and/or" include any one of the two or more listed relevant items, as well as any and all combinations of the listed relevant items. In which, any and all combinations include any two of the listed relevant items, any more of the listed relevant items, or combinations of all the listed relevant items. For example, "A and/or B" refers to the groups consisting of A, B, and "the combination of A and B". In which, "containing A and/or B" can mean "containing A, containing B, and containing both A and B," or it can mean "containing A, containing B, or containing both A and B," which should be understood appropriately according to the context.

The terms "its combination," "any combination thereof," and "any manner of combination thereof" here include all appropriate combinations of any two or more of the listed items.

Here, the terms "suitable combination mode," "suitable mode," and "any suitable mode" use "suitable" based on enabling the implementation of the technical solutions of the present application.

Here, the terms such as "preferred", "preferable", "more preferable", "appropriate", "optimal", and "more optimal" are only used for describing implementation modes or embodiments with better effects and should be understood as not limiting the scope of protection of the present application. If a technical solution contains a plurality of instances of "preferred", unless otherwise specified, and provided there are no contradictions or mutual restrictions, each "preferred" should be considered independently.

In the present application, terms such as "further", "furthermore", "particular", "for example", "such as", "example", and "illustration" are used for describing purposes and indicate differences in content, but should not be understood as limiting the scope of protection of the present application.

In the present application, in the terms such as "first aspect", "second aspect", "third aspect", "fourth aspect", and "fifth aspect", the "first", "second", "third", "fourth", and "fifth" are used solely for descriptive purposes. They should not be understood as indicating or implying relative importance or quantity, nor as implicitly indicating the significance or quantity of the technical features referred to. Moreover, the terms like "first", "second", "third", "fourth", and "fifth" are intended only for non-exhaustive enumeration and description, and should be understood as not constituting a closed limitation on quantity.

In the present application, unless explicitly stated otherwise, the first characteristic being "on" or "under" the second characteristic may mean that the first and second characteristics are in direct contact, or that the first and second characteristics are indirectly in contact through an intermediate medium. In the present application, unless explicitly stated otherwise, the first characteristic being "on" or "under" the second characteristic can indicate a relative position relationship in terms of horizontal height, or it can merely indicate the existence of an attachment relationship without limiting the relative position in terms of horizontal height.

In the present application, the term "room temperature" generally refers to 4°C-35°C, and may refer to 20°C ± 5°C. In some implementation modes or embodiments of the present application, room temperature refers to 20°C-30°C.

In the present application, for units related to the data range, if a unit is only indicated after the right endpoint, it means that the units for both the left and right endpoints are the same. For example, 3~5 or 3-5 h indicates that the units for the left endpoint "3" and the right endpoint "5" are both hours (h), and they have the same meaning as 3h-5h. Similarly, other parameters such as temperature and size should be understood in the same way.

The weight or mass of relevant components in the implementation modes or embodiments in the present application can refer not only to the content of each component but also to the proportional relationship of the weight or mass between the components. Therefore, as long as the content of the relevant components in the implementation modes or embodiments in the present application is scaled up or down proportionally, it is within the scope described in the present application. Further, the mass involved in the implementation modes or embodiments in the present application can be in micrograms (µg), milligrams (mg), grams (g), kilograms (kg), or other mass units commonly known in the chemical industry. Unless otherwise specified, the mass ratio is equal to the corresponding weight proportion. For example, if the mass of substance A is m1 and its weight is W1, and the mass of substance B is m2 and its weight is W2, the mass ratio m1/m2 is numerically equal to the corresponding weight proportion W1/W2.

In the present application, unless otherwise stated, wt% refers to the weight percentage based on weight, which is numerically equal to the corresponding mass percentage based on mass. In the present application, for weight percentages, recording as "0" has the same meaning as "0wt%" and can be used interchangeably.

In the present application, unless otherwise specified, the units of the parameters are as follows: nm represents nanometer, µm represents micrometer, S/cm represents Siemens per centimeter, V represents volt, mPa•S represents millipascal•second, mg/cm² represents milligrams per square centimeter, g/cm² represents grams per square centimeter, g/cm³ represents grams per cubic centimeter, °C represents degrees Celsius, mA/g represents milliampere per gram, and mAh/g represents milliampere-hour per gram.

In the present application, "greater than or equal to", "greater than or equal to", and "≥" have the same meaning and can be used interchangeably; "less than or equal to", "less than or equal to", and "≤" have the same meaning and can be used interchangeably; "greater than" can equivalently be expressed as ">", and "less than" can equivalently be expressed as "<". In the present application, unless otherwise specified, "greater than or equal to" and "≥" can be considered to also provide the two options of "greater than" and "equal to". In the present application, unless otherwise specified, "less than or equal to" and "≤" can be considered to also provide the two options of "less than" and "equal to".

In the present application, the exemplary descriptions such as "in some implementation modes (or embodiments)" or "in one implementation mode (or embodiment)" are and may encompass, but are not limited to, the following meanings: these solutions can be combined with other solutions in an appropriate manner to form new technical solutions.

In the present application, unless otherwise specified, a "solid-state battery" as provided in the present application refers to a battery of which an electrolyte includes a solid electrolyte; generally, the solid-state battery includes a positive electrode layer, a solid electrolyte layer, and a negative electrode layer. During the charging and discharging process of the battery, active ions are intercalated and de-intercalated between the positive and negative electrode layers. The solid electrolyte layer has an effect of conducting ions between the positive and negative electrode layers, and it can also separate the positive and negative electrode layers so as to prevent short circuits; therefore, a conventional separator used in lithium-ion batteries may not be required in solid-state battery. By replacing an organic electrolyte solution in the traditional liquid lithium-ion battery with a non-flammable solid electrolyte, the safety of the battery is significantly improved. In addition to enhancing safety, the solid-state battery can better accommodate high-energy-density positive and negative electrode materials, reduce the system weight, and help improve the energy density.

In the present application, unless otherwise specified, the "solid electrolyte" refers to an electrolyte material or substance that exists in a solid form during storage and preparation of solid-state batteries and their components, as well as during the operation of solid-state batteries. It is to be understood to include, but is not limited to, solid electrolytes existing in a solid form at room temperature.

In the present application, unless otherwise specified, the electrode layer can be the positive electrode layer or the negative electrode layer; the "active material" refers to a substance which is used in the electrode layer and capable of reversibly intercalating and de-intercalating the active ions. Unless otherwise specified, the "negative electrode active material" refers to a substance which used in the negative electrode layer and is capable of reversibly intercalating and de-intercalating the active ions; and the "positive electrode active material" refers to a substance which is used in the positive electrode layer and capable of reversibly de-intercalating and intercalating the active ions. During charging of the solid-state battery, the active ions de-intercalate from the positive electrode and intercalate into the negative electrode through the solid electrolyte layer; and during discharging of the solid-state battery, the active ions de-intercalate from the negative electrode and intercalate into the positive electrode. The active ions are not particularly limited; optionally, the active ions can be lithium ions, corresponding to a lithium-ion solid-state battery.

In the present application, the terms "electrode active material," "electrode active substance(material)," "active material," and "active substance(material)" have the same meaning and can be used interchangeably; the terms "positive electrode active substance(material)" and "positive electrode active material" have the same meaning and can be used interchangeably; and the "negative electrode active substance(material)" and "negative electrode active material" have the same meaning and can be used interchangeably. The terms "positive electrode active substance(material)" and "positive electrode active material" have the same meaning and can be used interchangeably; and the "negative electrode active substance(material)" and "negative electrode active material" have the same meaning and can be used interchangeably.

In the present application, unless otherwise specified, the "electrode active material layer" includes at least one of the positive electrode active material layer in the positive electrode layer and the negative electrode active material layer in the negative electrode layer; and depending on the specific context, the electrode active material layer may refer to either the positive electrode active material layer or the negative electrode active material layer. It is to be understood that the positive electrode active material layer contains the positive electrode active material, and the negative electrode active material layer contains negative electrode active material. In the present application, the "electrode active material layer" may also be abbreviated as the "active material layer".

In the present application, unless otherwise stated, the positive electrode layer includes at least the positive electrode active material layer.

In the present application, unless otherwise specified, the positive electrode active material layer includes at least the positive electrode active particles, and usually includes positive electrode electrolyte particles.

In the present application, unless otherwise specified, the "positive electrode active particles" refer to particles containing the positive electrode active material, which are capable of reversibly intercalating and de-intercalating the active ions.

In the present application, unless otherwise stated, the "positive electrode electrolyte particles" and "positive electrode solid electrolyte" have the same meaning and can be used interchangeably, referring to the solid electrolyte that can be used in the positive electrode film or positive electrode layer. The positive electrode electrolyte particles can enhance the ion conduction capability of the positive electrode film or positive electrode layer and reduce interface impedance, thereby promoting the charge transfer efficiency between the positive electrode active material and the external environment, as well as the full utilization of its capacity.

In the present application, unless otherwise specified, the "negative electrode active particles" refer to the particles containing the negative electrode active substance, which are capable of reversibly intercalating and de-intercalating the active ions.

The interface contact in solid-state batteries is one of the bottlenecks limiting their performance, poor interface contact will affect the battery discharge capacity and also degrade its rate performance and cycle performance. Currently, the common practice for the solid-state battery is to adopt a composite positive electrode approach on the positive electrode side of the solid-state battery, and both the positive electrode active material and solid electrolyte are arranged in the positive electrode. The solid electrolyte enhances the ion conduction capability on the positive electrode side, promotes the charge transfer efficiency between the positive electrode active substance and the external environment, as well as the full utilization of its capacity; moreover, the electronic conductivity of the positive electrode active substance itself is utilized to conduct electrons, thereby improving the cycling stability of the battery. Among various solid electrolyte materials, sulfide solid electrolyte, due to its ultra-high ionic conductivity (about 10⁻³-10⁻² S/cm, nearly comparable to commercial liquid electrolytes) and good flexibility, has excellent ion conduction capability and good deformability, making it become one of the most promising solid electrolyte materials for practical applications and industrialization.

However, due to the "solid-solid contact" characteristic in the solid-state batteries, the contact between the positive electrode active material and the solid electrolyte includes numbers of point contacts, and positive electrode active substances cannot be completely wetted like an electrolyte solution in liquid batteries, which leads to insufficient interfacial ion transport between the positive electrode active substance and the solid electrolyte, resulting in unsatisfactory performance exerting of the solid-state batteries. In sulfide solid-state batteries containing sulfide electrolytes, especially those with the positive electrode active material layer containing sulfide electrolytes, the interfacial ion transport between the positive electrode active substance and the sulfide electrolyte is one of the key factors affecting battery performance.

For the sulfide solid-state batteries with the positive electrode active material layers containing the oxide positive electrode active substances, interfacial side reactions between the oxide positive electrode active substances and the sulfide electrolytes are also one of the key factors limiting battery performance, and the interfacial side reactions involved include chemical reactions from direct contact between the oxides and sulfides, as well as electrochemical reactions of oxidative decomposition of the sulfide electrolytes caused by possible release of oxygen from the oxide positive electrode active substances at high voltage. Lithium transition metal oxides are one of the commonly used positive electrode active substances in conventional lithium-ion secondary batteries, and can provide high energy density. If the oxide positive electrode active substances (such as lithium transition metal oxides) are used in positive electrodes of all-solid-state batteries, an electrochemical operating window of the positive electrode is generally at 2.8-4.8 V; and the electrochemical operating window of the positive electrodes using materials such as lithium-cobalt oxides, lithium-nickel-cobalt-manganese oxides, lithium-nickel-cobalt-aluminum oxides, and lithium-rich manganese-based positive electrode active substances as the positive electrode active substances is usually within this range. However, at high voltage, the oxide positive electrode active substances (such as the lithium transition metal oxides) can easily release oxygen, affecting the stability of the positive electrode active substances and degrading battery cycle performance. For the positive electrodes containing sulfide solid electrolytes, if the positive electrode active substances include oxide positive electrode active substances (such as the lithium transition metal oxides), relatively high voltage of the electrochemical operating window makes the sulfide solid electrolytes susceptible to oxidative decomposition at high voltages, which in turn can lead to degrading of the discharge capacity, rate performance, and cycle performance.

If electrolyte materials such as LiNbO₃, LiTaO₃, Li₃BO₃, and Li₂ZrO₃ are coated on the surfaces of the positive electrode active substances, they can theoretically play an effect of blocking chemical reactions between the oxide positive electrode active substances and the sulfide electrolytes, but they cannot inhibit the oxygen release from the oxide positive electrode active substances; additionally, these coating materials have both ionic conduction and electron insulating characteristics, have low ionic conductivity (e.g., 10⁻⁵ S/cm), and easily lead to insufficient electronic conduction in the positive electrode, consequently, both ion conduction and electronic conduction of the solid-state battery interface are inadequate, resulting in unsatisfactory discharge capacity, rate performance, and cycle performance of the batteries at high voltages.

Based on this, according to various embodiments and examples of the present application, the embodiments and examples of the present application provide at least one positive electrode active layer composition, positive electrode active coated particles, positive electrode film, solid-state battery, electrical device, and application.

In a first aspect, the present application provides the positive electrode active layer composition.

In some embodiments, the positive electrode active layer composition is provided and includes the positive electrode active coated particles and positive electrode electrolyte particles; each positive electrode active coated particle includes a positive electrode active body, and a first coating sub-layer and a second coating sub-layer which coat at least part of a surface of the positive electrode active body; the first coating sub-layers are located between the positive electrode active bodies and the second coating sub-layers; the positive electrode active bodies include oxide positive electrode active substances; the first coating sub-layers include non-carbon conductive substances; the second coating sub-layers include electrolyte solids; and at least one of the positive electrode electrolyte particles and the second coating sub-layers contain a sulfide electrolytes.

In some embodiments, the positive electrode active layer composition is provided and includes the positive electrode active coated particles and the positive electrode electrolyte particles; the positive electrode active coated particles include the positive electrode active bodies and coating layers coating at least part of the surfaces of the positive electrode active bodies, the coating layers include the first coating sub-layers and the second coating sub-layers, and the second coating sub-layers are located on the surfaces of the sides, away from the positive electrode active bodies, of the first coating sub-layers (namely, the coating layers include the second coating sub-layers and the first coating sub-layers located between the positive electrode active bodies and the second coating sub-layers); the positive electrode active bodies include the oxide positive electrode active substances; the first coating sub-layers include the non-carbon conductive substances (for example, the non-carbon conductive substances can include at least one of elemental Se, elemental Te, and an Se/Te compound); the second coating sub-layers include the electrolyte solids; and at least one of the positive electrode electrolyte particles and the second coating sub-layers include the sulfide electrolytes.

The positive electrode active layer composition can be configured to form the positive electrode active material layers, and the solid-state battery prepared from the positive electrode active layer composition achieve high discharge capacity, rate performance and cycle performance. The positive electrode active material layers can be located in the positive electrode film or the positive electrode layers in the solid-state battery.

In some embodiments, the positive electrode active layer composition is provided and includes the positive electrode active coated particles and the positive electrode electrolyte particles;
the positive electrode active coated particles include the positive electrode active bodies and coating layers coating at least part of the surfaces of the positive electrode active bodies, the coating layers include the first coating sub-layers and the second coating sub-layers, and the second coating sub-layers are located on the surfaces of the sides, away from the positive electrode active bodies, of the first coating sub-layers;
the positive electrode active bodies include the positive electrode active substances, and the positive electrode active substances include the oxide positive electrode active substances;
the first coating sub-layers include the non-carbon conductive substances, the non-carbon conductive substances can include at least one selected from the group consisting of the elemental Se, elemental Te, and Se/Te compound, the Se/Te compound has the chemical formula of SeₓTe₁₋ₓ, 0<x<1;
the second coating sub-layers include the electrolyte solids; and
at least one of the positive electrode electrolyte particles and the second coating sub-layers include the sulfide electrolytes.

In the present application, unless otherwise specified, "composition" refers to a mixture of different substances.

In the present application, unless otherwise specified, the "positive electrode active layer composition" refers to a mixture suitable for preparing the positive electrode active material layers. It is to be understood that, since at least one of the positive electrode electrolyte particles and the second coating sub-layers of the positive electrode active coated particles contains the sulfide electrolytes, the solid-state battery with the positive electrode layer including the positive electrode active layer is a sulfide solid-state battery.

Unless otherwise specified, the "sulfide solid-state battery" refers to a solid-state battery in which the electrolyte includes a sulfide-based solid electrolyte. By way of example, the sulfide-based solid electrolyte can be located in the positive electrode layer of the sulfide solid-state battery, or located in the solid electrolyte layer. The sulfide solid-state battery can further be an all-solid-state battery.

In the present application, unless otherwise specified, the "all-solid-state battery" refers to a solid-state battery in which the electrolyte is entirely composed of solid electrolytes; meanwhile, the positive electrode layer, the negative electrode layer, and the electrolyte are all made of solid materials, and the battery does not contain any liquid electrolyte, and therefore it can be called the "all-solid-state battery".

In the present application, unless otherwise specified, the term "solid-state battery" in any implementation mode or embodiment may include, but is not limited to, a sulfide all-solid-state battery. Unless otherwise specified, the "sulfide all-solid-state battery" refers to the all-solid-state battery in which the electrolyte includes a sulfide-based solid electrolyte. The sulfide-based solid electrolyte can be located in the positive electrode layer of the sulfide all-solid-state battery, or located in the solid electrolyte layer.

In the present application, unless otherwise specified, the "sulfide electrolyte", "sulfide electrolyte component", and "sulfide solid electrolyte component" have the same meaning and can be used interchangeably, referring to a solid electrolyte component in a form of a sulfide; and the chemical formula of the sulfide electrolytes includes sulfides composed of sulfur (S) elements. The existing form of the "sulfide electrolyte" in the embodiments or examples of the present application is not particularly limited, it can be an independent sulfide electrolyte substance, or part of a composite material, for example, it can be a sulfide electrolyte component in the positive electrode electrolyte particles, or a sulfide electrolyte component located in positive electrode active coated particles (in this case, the second coating sub-layers of the positive electrode active coated particles contain the sulfide electrolyte), or a sulfide electrolyte component in the solid electrolyte layer.

In the present application, unless otherwise specified, the "sulfide-based electrolyte", "sulfide-based solid electrolyte", and "sulfide-based electrolyte particles" have the same meaning and can be used interchangeably, referring to the solid electrolytes containing sulfide electrolyte components, which can be the sulfide electrolyte itself, but not limited thereto.

In the present application, unless otherwise specified, the types of the sulfide electrolyte components contained in different positions or different materials of the "sulfide solid-state battery" may be the same or different. For example, the types of sulfide electrolyte components contained in the positive electrode layer and the solid electrolyte layer may be the same or different. The type of the sulfide electrolyte components in the positive electrode active coated particles can be the same as or different from the sulfide electrolyte component in the sulfide-based electrolytes. By way of example, the sulfide-based electrolyte component may be located in the positive electrode electrolyte particles or in the solid electrolyte layer, but not limited thereto.

In the present application, unless otherwise specified, the "electrolyte solid" refers to electrolyte materials or substances in the solid form and is a type of solid electrolyte.

In the present application, unless otherwise specified, the "positive electrode active coated particles" include the positive electrode active material bodies and the coating layers coating at least part of the surfaces of the positive electrode active bodies, the coating layers include the first coating sub-layers and the second coating sub-layers, that is, the coating layers include at least two coating sub-layers; therefore, the positive electrode active coated particles are of multi-layer coated structure. In the present application, the "coating layer" or "coating sub-layer" in the positive electrode active coated particles, unless otherwise specified, may be located on part of the surfaces of the positive electrode active bodies, or entirely cover the positive electrode active bodies.

In the present application, the positive electrode active bodies include the positive electrode active substances. Unless otherwise specified, the positive electrode active substances in the positive electrode active coated particles include the oxide positive electrode active substances. In the present application, unless otherwise specified, the "oxide positive electrode active substances" have the well-known meaning in the art, referring to the positive electrode active substances in the oxide form. Optionally, the oxide positive electrode active substances are the lithium transition metal oxides.

In the present application, unless otherwise specified, the "lithium transition metal oxides" have the well-known meaning in the art, referring to the positive electrode active materials containing transition metal elements and lithium.

In the present application, unless otherwise specified, the "non-carbon conductive substance" refers to a conductive substance that is different from carbon conductive substance and has the ability to conduct electrons. Unless otherwise specified, the "carbon conductive substance" refers to a conductive substance composed of carbon elements, such as conventional carbon conductive agents, further like one or more selected from the group consisting of superconducting carbon, acetylene black, carbon black, Ketjen black, carbon dots, carbon nanotubes, graphene, and carbon nanofibers.

In the present application, the "non-carbon conductive substance" in the positive electrode active layer composition includes a first conductive substance; in the present application, the "first conductive substance" is at least one selected from the group consisting of elemental Se, elemental Te, and Se/Te compound, and the Se/Te compound has the chemical formula of SeₓTe₁₋ₓ, 0<x<1. Optionally, x can be any of the following values, or an interval formed by any two of the following values: 0.01, 0.02, 0.04, 0.05, 0.06, 0.08, 0.1, 0.12, 0.14, 0.15, 0.16, 0.18, 0.2, 0.22, 0.24, 0.25, 0.26, 0.28, 0.3, 0.32, 0.35, 0.36, 0.38, 0.4, 0.42, 0.44, 0.45, 0.46, 0.48, 0.5, 0.55, 0.6, 0.65, 0.7, 0.75, 0.8, 0.85, 0.9, 0.92, 0.94, 0.95, 0.96, 0.97, 0.98, 0.99, etc. Both the elemental Se and elemental Te have high electronic conductivity, the electronic conductivity of the elemental Se is about 10 mS/cm and the electronic conductivity of the elemental Te is about 2,000 mS/cm. In addition, within the electrochemical window of 2.8-4.8 V, for example, within the electrochemical operating window of the oxide positive electrode active substances (such as the lithium transition metal oxides), selenium (Se) and tellurium (Te) have almost no electrochemical activity and essentially do not participate in electrochemical reactions, contributing essentially no capacity, and at this time, the capacity is provided by the positive electrode active substances such as the oxide positive electrode active substances (like lithium transition metal oxides).

In the present application, unless otherwise specified, the "elemental Se" and "Se element" have the same meaning and can be used interchangeably, both referring to Se in the elemental form. Unless otherwise specified, the "elemental Te" and "Te element" have the same meaning and can be used interchangeably, both referring to Te in the elemental form.

In the present application, unless otherwise specified, the "Se/Te compound" refers to a substance composed of the Se element and Te element, with the chemical formula of SeₓTe₁₋ₓ (0<x<1), and can also be recorded as a "selenium-tellurium alloy". Generally, the Se/Te compound with a specific atomic ratio can be prepared using the following method: weighing Se powder and Te powder according to a stoichiometric ratio, sealing in a quartz tube under vacuum with the vacuum degree of about 10⁻⁵ Torr, then heating at 900°C to obtain an uniformly-mixed melt, and quenching the melt in ice water to obtain the Se/Te compound (selenium-tellurium alloy).

In the present application, the non-carbon conductive substances in the positive electrode active layer composition may, in addition to including the first conductive substances, also include other types of non-carbon conductive substances, such as non-carbon conductive substances having electronic conductivity greater than or equal to that of the elemental Se under certain temperature conditions. In optional examples of other types of non-carbon conductive substances, the non-carbon conductive substances include the non-carbon conductive substances having the electronic conductivity greater than or equal to that of the elemental Se under at least one temperature between 20°C and 100°C, or within at least one temperature range, under the same test conditions.

For the solid-state batteries with relatively low voltage in the electrochemical window, the elemental Se and Te are used as the positive electrode active substances in the positive electrode of the solid-state battery, and at the moment, the elemental Se and Te can be subjected to conversion reactions to store lithium; for example, the electrochemical operating window of a lithium-ion solid-state battery using selenium as the positive electrode active substance (which can be referred to as a lithium-selenium battery) is about 1.0-3.0 V.

The positive electrode active layer composition includes the positive electrode active coated particles that are of a multi-layer coated structure, and also includes the positive electrode electrolyte particles, in which, the positive electrode active bodies containing the oxide positive electrode active substances (such as lithium transition metal oxides) are inner cores of the positive electrode active coated particles; the first coating sub-layers containing the non-carbon conductive substances and the second coating sub-layers containing the electrolyte solids are arranged on the surfaces of the positive electrode active bodies in sequence; at least one of the positive electrode electrolyte particles and the second coating sub-layers contains sulfide electrolyte components, namely, the oxide positive electrode active substances (such as the lithium transition metal oxides) in the positive electrode active coated particles are separated from the sulfide electrolytes in the positive electrode active layer composition by at least the first coating sub-layers; the sulfide electrolytes in the positive electrode active layer composition can be located in the positive electrode electrolyte particles or in the second coating sub-layers of the positive electrode active coated particles.

The non-carbon conductive substances in the first coating sub-layers include first conductive substances; the first conductive substances are at least one of elemental Se, elemental Te, and Se/Te compound, and consists of one or both of selenium (Se) element and tellurium (Te) element. The elemental Se and the elemental Te both have high electronic conductivity, the electronic conductivity of the elemental Se is about 10 mS/cm, and the electronic conductivity of the elemental Te is about 2,000 mS/cm, such that the non-carbon conductive substances can provide high electronic conductivity and can be used in the positive electrode film or the positive electrode layer of the solid-state battery. In an electrochemical operating window (such as 2.8-4.8 V) of the oxide positive electrode active substances (such as the lithium transition metal oxides), selenium (Se) and tellurium (Te) show almost no electrochemical activity, contribute virtually no capacity, and basically do not participate in electrochemical reactions, thereby maintaining stable electronic conductivity. In addition, the Se and Te elements are in the same group as the sulfur (S) element and have good compatibility with the sulfide electrolytes.

Due to the separation effect of the first conductive substances in the first coating sub-layers on the oxide positive electrode active substances (such as the lithium transition metal oxides) and the sulfide electrolytes, direct contact and interface side reaction between the oxide positive electrode active substances (such as the lithium transition metal oxides) and the sulfide electrolytes can be reduced or blocked. Peroxide ions (O₂²⁻) or oxygen free radicals generated by charging to a high voltage can react with Se and/or Te in the non-carbon conductive substances to generate SeO₃²⁻ and/or TeO₃²⁻, and such reaction can inhibit oxygen release of the oxide positive electrode active substances (such as the lithium transition metal oxides), thereby reducing oxygenolysis of the sulfide electrolytes and improving the structural stability of the positive electrode active particles as well as the electrochemical performance of the battery; and the prepared solid-state battery can achieve high discharge capacity, rate performance, and cycle performance at the same time.

The second coating sub-layers are further arranged in the positive electrode active particles provided with the first coating sub-layers; due to the ion conduction capability provided by the electrolyte solids in the second coating sub-layers, the interface contact between the positive electrode active substances and the positive electrode electrolyte particles can be improved, thereby improving the ion conduction between the positive electrode active coated particles and the positive electrode electrolyte particles, reducing the interface impedance and improving the battery performance.

The first coating sub-layers can provide high electronic conductivity, and the electrolyte solids in the second coating sub-layers can improve the interface ion transmission, such that the positive electrode active layer composition achieves high electronic conductivity and good ion conduction performance at the same time; and by means of such structural design, oxygen release of the oxide positive electrode active substances (such as the lithium transition metal oxides) can be inhibited, the corresponding solid-state battery will have high discharge capacity and rate performance, and moreover, the cycle performance of the solid-state battery can be improved.

By multiple synergistic effects between solid-state coated positive electrode particles and the positive electrode electrolyte particles, a good and stable electric contact network can be formed in the positive electrode active material layer, thus the interface impedance can be reduced, the charge transfer efficiency between the positive electrode active substances and the outside as well as full release of the capacity of the positive electrode active substances can be promoted; and the positive electrode active layer composition can be configured to prepare the solid-state battery with high discharge capacity, rate performance and cycle performance.

The structures of the positive electrode active coated particles 80 in some embodiments of the present application are shown in FIG. 1 and FIG. 2. The positive electrode active coated particles 80 shown in FIG. 1 include positive electrode active bodies 82, and first coating sub-layers 84 and second coating sub-layers 86 which are located on the surfaces of the positive electrode active bodies 82; the second coating sub-layers 86 are located on the surfaces of the sides, away from the positive electrode active bodies 82, of the first coating sub-layers 84, namely the first coating sub-layers 84 are located between the positive electrode active bodies 82 and the second coating sub-layers 86. The positive electrode active coated particles 80 shown in FIG. 2 include the positive electrode active bodies 82, and the first coating sub-layers 84 and the second coating sub-layers 86 which are located on the surfaces of the positive electrode active bodies 82; the first coating sub-layers 84 are located between the positive electrode active bodies 82 and the second coating sub-layers 86; the positive electrode active bodies 82 include oxide positive electrode active substances 802; the first coating sub-layers 84 include non-carbon conductive substances 804; and the second coating sub-layers 86 include electrolyte solids 806.

In some embodiments of the present application, the positive electrode active layer composition includes, but is not limited to, the positive electrode active coated particles 80a with the second coating sub-layers containing the sulfide electrolytes, as well as the positive electrolyte particles 66, in which, the second coating sub-layers of the positive electrode active coated particles include the sulfide electrolytes. The composition schematic diagram of the positive electrode active layer composition suitable for preparing the positive electrode active material layers 220 in FIG. 3 can be referred to.

In some embodiments of the present application, the positive electrode active layer composition includes, but is not limited to, the positive electrode active coated particle 80 and sulfide-based electrolytes 662. The composition schematic diagram of the positive electrode active layer composition suitable for preparing the positive electrode active material layers 220 in FIG. 4 can be referred to.

In some embodiments of the present application, the positive electrode active layer composition includes, but is not limited to, the positive electrode active coated particles 80a with the second coating sub-layers containing the sulfide electrolytes and the sulfide-based electrolytes 662, in which, the second coating sub-layers of the positive electrode active coated particles include the sulfide electrolytes, and the sulfide-based electrolytes 662 also include the sulfide electrolytes. The composition schematic diagram of the positive electrode active layer composition suitable for preparing the positive electrode active material layers 220 in FIG. 5 can be referred to.

In some embodiments of the present application, the positive electrode active layer composition includes, but is not limited to, the positive electrode active coated particles 80a with the second coating sub-layers containing the sulfide electrolytes, in which, the second coating sub-layers of the positive electrode active coated particles contain the sulfide electrolytes. The composition schematic diagram of the positive electrode active layer composition suitable for preparing the positive electrode active material layers 220 in FIG. 6 can be referred to.

It is to be understood that the components in each positive electrode active material layer shown in FIG. 3, FIG. 4, FIG. 5, and FIG. 6 can be independently not limited to the figures.

The structures of the positive electrode active coated particles 80 in some embodiments of the present application are shown in FIG. 7. In the positive electrode active coated particle 80a with the second coating sub-layers containing the sulfide electrolytes in FIG. 7, the positive electrode active bodies 82 include the oxide positive electrode active substances 802, the first coating sub-layers 84 include the non-carbon conductive substances 804, and the second coating sub-layers 86 include the sulfide-based electrolytes 662 (at the moment, the electrolyte solids 806 include the sulfide-based electrolytes 662).

For skilled personnel in this art, based on the structure and chemical composition of the positive electrode active coated particles described in the present application, existing particle coating methods, including but not limited to those already known, can be used for preparation. As an optional example, physical coating methods can be employed for example. The solid coating material can be applied to at least part of the surfaces of the target particles using existing physical coating methods. Dry coating can be used, but not limited thereto. Reference can also be made to the examples below.

In a first aspect, the present application provides a preparation method for positive electrode active coated particles, including the following steps:
S100: arranging first coating sub-layers including non-carbon conductive substances on at least one part of the surfaces of positive electrode active bodies to obtain first coated intermediates; and
S200: arranging second coating sub-layers including electrolyte solids on at least one part of the surfaces, far away from the positive electrode active bodies, of the first coating sub-layers.

In the positive electrode active coated particles in the embodiments or examples of the present application, the second coating sub-layers can contain or do not contain the sulfide electrolytes.

In some embodiments, a dry coating technology (which can be carried out by a dry coating device) is carried out to arrange the first coating sub-layers including the non-carbon conductive substances on at least one part of the surfaces of the positive electrode active bodies. In some embodiments, according to a target coating amount of the non-carbon conductive substances, the positive electrode active bodies and the first coating sub-layers including the non-carbon conductive substances are mixed according to a required ratio, and then subjected to thermal treatment in an inert atmosphere (such as an argon atmosphere) to obtain the first coated intermediates; the coated intermediates include the positive electrode active bodies and the first coating sub-layers located on at least one part of the surfaces of the positive electrode active bodies; and the first coating sub-layers include the non-carbon conductive substances. In an example using LiNi_{0.8}Co_{0.1}Mn_{0.1}O₂ as the positive electrode active body and forming the first coating sub-layers with the elemental Se, the thermal treatment can be carried out in the argon atmosphere at 300°C for 1 h, and the corresponding first coated intermediates can be recorded as "NCM811@Se coated body".

In some embodiments, the second coating sub-layers are introduced on the basis of the first coated intermediates by a wet coating technology, and the second coating sub-layers including the electrolyte solids are arranged on at least part of the surfaces, away from the positive electrode active bodies, of the first coating sub-layers. In some embodiments, the second coating sub-layer materials including the electrolyte solids are mixed with a dispersing solvent (for example, uniformly mixed in a stirring manner), the first coated intermediates are added, dispersion is carried out (for example, dispersion in a stirring manner), and the obtained dispersion liquid is dried under a heating condition, thus obtaining the positive electrode active coated particles with the first coating sub-layers and the second coating sub-layers at the same time. The dispersing solvent can be a non-aqueous solvent, and further can be an anhydrous organic solvent. In an example taking the first coated intermediates as the "NCM811@Se coated body" and forming the second coating sub-layers by the Li_{5.5}PS_{4.5}Cl_{1.5} (which can be recorded as LPSCl) sulfide electrolytes, the dispersing solvent can be anhydrous acetonitrile, Li_{5.5}PS_{4.5}Cl_{1.5} (LPSCl) and anhydrous acetonitrile are stirred and mixed uniformly, the metered NCM811@Se coated body is added according to the coating amount of the second coating sub-layers, stirring is continuously carried out for 3 h, and the obtained dispersion liquid is dried under vacuum at 150°C for 5 h to remove a liquid-phase solvent, then the positive electrode active coated particles with the first coating sub-layers being Se and the second coating sub-layers being LPSCl can be obtained, which can be recorded as "NCM811@Se@LPSCl coated body".

In the present application, whether the particles have the coating layers or not can be detected and analyzed by particle structure analysis methods such as a transmission electron microscope (TEM), the element types and chemical components of the positive electrode active bodies, the coating layer, and each coating sub-layer can be detected and identified by a combination of element analysis methods such as an energy disperse spectroscopy (EDS), an X-ray diffraction (XRD) technology, and an inductively coupled plasma spectrometer (ICP method); and parameters such as the thickness of the coating layers and each coating sub-layer, and the weight proportion or weight percentage of the coating layers or each coating sub-layer in the positive electrode active coated particles can be analyzed by these methods.

It is to be noted that the positive electrode active layer composition described in the present application can be directly introduced to a preparation process for the solid-state battery, the sulfide battery or the sulfide all-solid-state battery in a solid form by a dry method, and can also be introduced to the battery preparation process in a slurry mode by a wet method, a solvent is removed by a subsequent drying process, and only solid materials in the slurry are reserved in the battery.

In some embodiments, the positive electrode active layer composition is a solid material, and constituent materials of the solid-state battery material are solids.

In some embodiments, the positive electrode active layer composition is slurry, and the composition materials of the solid-state battery material are a solid material and a dispersion solvent; it is to be understood that the solid material in the slurry includes the above-mentioned positive electrode active coated particles and the positive electrode electrolyte particles. Generally, the dispersion solvent is a non-aqueous solvent; and as an optional example, the removable solvent can include one or more of paraxylene, trimethylbenzene, butyl butyrate, heptane and the like, and further can be paraxylene.

In some embodiments, the positive electrode active layer composition is applied to the positive electrode film or the positive electrode layer in the solid-state battery.

In some embodiments, the electronic conductivity of the non-carbon conductive substances under at least one temperature of 20-100°C or within at least part of temperature range is greater than or equal to that of the elemental Se. Optionally, the temperature for testing the electronic conductivity can be any one of the following temperatures or an interval formed by any two of the following temperatures: 20°C, 25°C, 26°C, 30°C, 35°C, 40°C, 45°C, 50°C, 60°C, 70°C, 80°C, 90°C, 100°C, and the like. As an optional example, the temperature for testing the electronic conductivity can also be 20-30°C, 20-40°C, 20-50°C, 20-60°C, 20-80°C, 40-50°C, 40-60°C, and the like.

The non-carbon conductive substances in the first coating sub-layers may, in addition to the first conductive agent, also include other non-carbon conductive substances with good electronic conductivity, for example, the other non-carbon conductive substances can be non-carbon conductive substances with electronic conductivity superior to that of the elemental Se or basically equivalent to that of the elemental Se under certain temperature conditions.

In the present application, unless otherwise specified, a conventional method for testing a powdery conductive agent can be used for testing the electronic conductivity of the non-carbon conductive substance, for example, a four-probe tester can be used for testing.

In some embodiments, the weight percentage of the Te element in the non-carbon conductive substances is ≥0wt% (greater than or equal to 0wt%), optionally, ≥50wt%, further optionally, 50-100wt%, and still further optionally, 60-100wt%. The weight percentage of the Te element in the non-carbon conductive substances can be any one of the following weight percentages or an interval formed by any two of the following weight percentages:%, 0wt%, 10wt%, 20wt%, 30wt%, 40wt%, 50wt%, 60wt%, 70wt%, 80wt%, 90wt%, 100wt%, etc.

The elemental Te has high electronic conductivity (about 2,000 mS/cm), can achieve the electronic conductivity which is basically the same as that of a traditional carbon black material (for example, the electronic conductivity of carbon black is about 10-100 S/cm), and can provide good electronic conductivity. By arranging the Te element in a more proportion in the non-carbon conductive substances, the solid-state battery with higher discharge capacity, rate performance and cycle performance can be prepared.

In some embodiments, the weight percentage of the first conductive substances in the non-carbon conductive substances can be 80wt%-100wt%, optionally, 90wt%-100wt%, and it can also be any one of the following percentages or an interval formed by any two of the following percentages: 80wt%, 85wt%, 90wt%, 95wt%, 96wt%, 98wt%, 99wt%, 99.9wt%, 100wt%, etc.

In some embodiments, the non-carbon conductive substances are the first conductive substances, namely, the non-carbon conductive substances are composed of the first conductive substances, and at the moment, the weight percentage of the first conductive substances in the non-carbon conductive substances is 100wt%; the non-carbon conductive substances are at least one selected from the group consisting of the elemental Se, elemental Te, and Se/Te compound; and the Se/Te compound has the chemical formula of SeₓTe₁₋ₓ, 0<x<1.

By controlling the weight percentage of the first conductive substances in the non-carbon conductive substances within the above-mentioned range, the effect of the first conductive substances on inhibiting the oxygen release of the positive electrode active substances (such as the lithium transition metal oxides) can be better exerted, and therefore, the solid-state battery with higher discharge capacity, rate performance and cycle performance can be prepared.

In some embodiments, the Dᵥ50 of the non-carbon conductive substances can be 1 nm-1 µm, optionally, 10 nm-1 µm, and further optionally, 10-500 nm, but not limited thereto; and the Dᵥ50 represents the particle size corresponding the cumulative volume distribution percentage of the multi-particle mixture reaching 50%. Dᵥ50 of the non-carbon conductive substances also can be any one of the following particle sizes or an interval formed by any two of the following particle sizes: 1 nm, 5 nm, 10 nm, 20 nm, 30 nm, 40 nm, 50 nm, 60 nm, 80 nm, 100 nm, 0.1 µm, 150 nm, 0.15 µm, 0.2 µm, 0.3 µm, 0.4 µm, 0.5 µm, and the like.

The definition and testing method of the Dᵥ50 also can refer to corresponding description in the following text.

By controlling the particle size of the non-carbon conductive substances within above-mentioned range, the effect of the first coating sub-layers can be fully exerted, while the manufacturing cost is controlled. The non-carbon conductive substances with the relatively moderate particle sizes are easier to manufacture.

In some embodiments, the weight percentage of the first coating sub-layer in the positive electrode active coated particles is 0.1-10wt%, and optionally, 0.5-5wt%. Optionally, the weight percentage of the first coating sub-layer in the positive electrode active coated particles can also be any one of the following weight percentages or an interval formed by any two of the following weight percentages: 0.1wt%, 0.2wt%, 0.4wt%, 0.5wt%, 0.6wt%, 0.8wt%, 1wt%, 1.2wt%, 1.5wt%, 1.6wt%, 1.8wt%, 2wt%, 2.5wt%, 3wt%, 3.5wt%, 4wt%, 5wt%, 6wt%, 7wt%, 7.5wt%, 8wt%, 8.5wt%, 9wt%, 9.5wt%, 10wt%, etc.

In some embodiments, the weight percentage of the non-carbon conductive substance in the first coating sub-layer can be 80-100wt%, optionally, 90%-100wt%, and it can also be any one of the following percentages or an interval formed by any two of the following percentages: 80wt%, 85wt%, 90wt%, 95wt%, 96wt%, 98wt%, 99wt%, 99.9wt%, 100wt%, etc. Optionally, the non-carbon conductive substances can be the first conductive substances.

In some embodiments, the weight percentage of the non-carbon conductive substances in the positive electrode active coated particles can also be any one of the following weight percentages or an interval formed by any two of the following weight percentages: 0.1wt%, 0.2wt%, 0.4wt%, 0.5wt%, 0.6wt%, 0.8wt%, 1wt%, 1.2wt%, 1.5wt%, 1.6wt%, 1.8wt%, 2wt%, 2.5wt%, 3wt%, 3.5wt%, 4wt%, 5wt%, 6wt%, 7wt%, 7.5wt%, 8wt%, 8.5wt%, 9wt%, 9.5wt%, 10wt%, etc. Optionally, the non-carbon conductive substances can be the first conductive substances.

In some embodiments, the thickness of the first coating sub-layer is 0.1-50 nm, optionally, 0.5-10 nm. Optionally, the thickness of the first coating sub-layer can be any one of the following thicknesses or an interval formed by any two of the following thicknesses: 0.1 nm, 0.2 nm, 0.3 nm, 0.4 nm, 0.5 nm, 0.6 nm, 0.8 nm, 0.9 nm, 1 nm, 1.2 nm, 1.5 nm, 1.6 nm, 1.8 nm, 2 nm, 2.5 nm, 3 nm, 3.5 nm, 4 nm, 5 nm, 6 nm, 7 nm, 7.5 nm, 8 nm, 8.5 nm, 9 nm, 9.5 nm, 10 nm, 15 nm, 20 nm, 25 nm, 30 nm, 35 nm, 40 nm, 45 nm, 50 nm, etc.

In some embodiments, the positive electrode active coated particles meet any one or more of the following characteristics (any numerical parameter in the following characteristic can also be selected from appropriate numerical value ranges here):
the weight percentage of the first coating sub-layer in the positive electrode active coated particles can be 0.1-10wt%, optionally, 0.5-5wt%;
the weight percentage of the non-carbon conductive substances in the first coating sub-layer can be 80-100wt%, optionally, 90-100wt%; and
the thickness of the first coating sub-layer is 0.1-50 nm, optionally, 0.5-10 nm.

By adjusting at least one of the weight percentage of the first coating sub-layers in the positive electrode active coated particles, the weight percentage of the non-carbon conductive substances in the first coating sub-layers, and the thickness of the first coating sub-layers within the above-mentioned range, the structural stability of the positive electrode active substances can be improved while a good and stable electric contact network is formed and the interface impedance is reduced, and moreover, the solid-state battery can achieve high discharge capacity, rate performance and cycle performance.

In some embodiments, in the positive electrode active layer composition, the sulfide electrolytes can include, but are not limited to, one or more of argyrodite type sulfide electrolytes, LGPS sulfide electrolytes, and lithium-sulfur phosphorus pentasulfide composite type sulfide electrolytes.

Unless otherwise specified, the argyrodite type sulfide electrolytes have an argyrodite type crystal phase structure. Optionally, the argyrodite type sulfide electrolytes may include the sulfide electrolytes with the chemical formula of Li_{6±s}P₁₋ⱼAⱼS_{5±s-t}BₜX_{1±s}, in which, 0≤j<1, 0≤t<1, 0≤s<1, A can be one or more elements selected from, but not limited to, Ge, Si, Sn, and Sb; B can be one or more elements selected from O, Se, and Te; and X can be one or more elements selected from Cl, Br, I, and F.

Unless otherwise specified, the LGPS sulfide electrolytes have an LGPS-type crystal phase structure. Optionally, the LGPS sulfide electrolytes may include the sulfide electrolytes with the chemical formula of Li_{10±δ5}Ge_{1-g}G_{g}P_{2-q}Q_{q}S_{12-w}W_{w}, in which, 0≤δ5<1, 0≤g≤1, 0≤q≤2, 0≤w<1; G is selected from one or both of the elements of Si and Sn; Q is Sb; and W is selected from one or more elements of O, Se, Te, Cl, Br, I, and F.

Optionally, the lithium-sulfur phosphorus pentasulfide composite type sulfide electrolytes may include the sulfide electrolytes with the chemical formula of (100-u-v)Li₂S·uP₂S₅·vMₘNₙ, in which, 0<u<100, 0≤v<100, 0≤u+v<100, 0≤m<4, 0≤n<6; M can be selected from one or more elements including but not limited to Li, B, Ge, Si, Sn, and Sb; and N can be selected from one or more elements of S, Se, Te, O, Cl, Br, I, and F.

If at least one of the positive electrolyte particles in the positive electrode layer of the solid-state battery and the second coating sub-layers includes various above-mentioned sulfide electrolytes, the oxidative decomposition of the sulfide electrolytes at a positive electrode under high voltage can be inhibited by the multi-layer coated structure design of the positive electrode active coated particles, furthermore, the discharge capacity, rate performance and cycle performance of the solid-state battery are improved, and in addition, the initial Coulombic efficiency of the solid-state battery can be improved.

In some embodiments, in the positive electrode active layer composition, the sulfide electrolytes in the coated electrolyte particles may include at least one of a binary sulfide solid-state system and a ternary sulfide solid-state system. Optionally, the binary sulfide solid-state system may include one or more of Li₂S-P₂S₅, Li₂S-SiS₂, Li₂S-GeS₂, and Li₂S-B₂S₃. Optionally, the ternary sulfide solid-state system may include the argyrodite type sulfide electrolytes, a , Li₂S-MeS₂-P₂S₅ ternary sulfide electrolytes, lithium-germanium-phosphorus-sulfur type sulfide electrolytes, a Li₂S-P₂S₅-MS ternary sulfide electrolyte, a Li₂S-P₂S₅-MCl ternary sulfide electrolyte, and a thio-LISICON sulfide electrolyte; Me may include one or more elements of Me, Si, Sn, Ge and Al, and further can be selected from one or more elements of Ge, Si and Al; and M can include one or more elements of Ge, Sn, As, Sb, Pb, Si, As, Ge and Al, and further can be selected from one or more elements of Ge, Sb, As, Ge, Si, Pb, Sb and Al.

In some embodiments, the weight percentage of the second coating sub-layer in the positive electrode active coated particles can be 0.1-10wt%, and optionally, 0.5-5wt%. Optionally, the weight percentage of the second coating sub-layer in the positive electrode active coated particles can also be any one of the following weight percentages or an interval formed by any two of the following weight percentages: 0.1wt%, 0.2wt%, 0.4wt%, 0.5wt%, 0.6wt%, 0.8wt%, 1wt%, 1.2wt%, 1.5wt%, 1.6wt%, 1.8wt%, 2wt%, 2.5wt%, 3wt%, 3.5wt%, 4wt%, 5wt%, 6wt%, 7wt%, 7.5wt%, 8wt%, 8.5wt%, 9wt%, 9.5wt%, 10wt%, etc.

Optionally, the weight percentage of the electrolyte solids in the second coating sub-layer can be greater than or equal to 50wt% (i.e., it can be ≥50wt%), further greater than or equal to 60wt%, even further greater than or equal to 80wt%, even further greater than or equal to 90wt%, even further greater than or equal to 95wt%, and even further greater than or equal to 100wt%. The weight percentage of the electrolyte solids in the second coating sub-layer can also be any one of the following weight percentages or an interval formed by any two of the following weight percentages: 50wt%, 55wt%, 60wt%, 65wt%, 70wt%, 72wt%, 74wt%, 75wt%, 76wt%, 78wt%, 80wt%, 82wt%, 84wt%, 85wt%, 86wt%, 88wt%, 90wt%, 92wt%, 94wt%, 95wt%, 96wt%, 97wt%, 98wt%, 99w%, 100wt%, etc. Optionally, the weight percentage of the electrolyte solids in the second coating sub-layers also can be selected from any one of the following ranges: 50-100wt%, 60-100wt%, 80-100wt%, 90-100wt%, and the like.

In some embodiments, the weight percentage of the electrolyte solids in the positive electrode electrolyte particles can be 0.1-10wt%, optionally, 0.5-5wt%. Optionally, the weight percentage of the electrolyte solids in the positive electrode electrolyte particles can also be any one of the following weight percentages or an interval formed by any two of the following weight percentages: 0.1wt%, 0.2wt%, 0.4wt%, 0.5wt%, 0.6wt%, 0.8wt%, 1wt%, 1.2wt%, 1.5wt%, 1.6wt%, 1.8wt%, 2wt%, 2.5wt%, 3wt%, 3.5wt%, 4wt%, 5wt%, 6wt%, 7wt%, 7.5wt%, 8wt%, 8.5wt%, 9wt%, 9.5wt%, 10wt%, etc.

In any related embodiments in various aspects of the present application, the electrolyte solids can be sulfide solid electrolytes without the coating layers.

Optionally, the weight percentage of the sulfide-based electrolytes in the electrolyte solids can be 0-100wt%, optionally, 50-100wt%, further optionally, 80-100wt%, and still further optionally, 90-100wt%, and also can be any one of the following percentages or an interval formed by any two of the following percentages: 0wt%, 1wt%, 2wt%, 4wt%, 5wt%, 6wt%, 8wt%, 10wt%, 15wt%, 20wt%, 25wt%, 30wt%, 35wt%, 40wt%, 45wt%, 50wt%, 55wt%, 60wt%, 65wt%, 70wt%, 72wt%, 74wt%, 75wt%, 76wt%, 78wt%, 80wt%, 82wt%, 84wt%, 85wt%, 86wt%, 88wt%, 90wt%, 92wt%, 94wt%, 95wt%, 96wt%, 97wt%, 98wt%, 99wt%, 100wt%, and the like.

In some embodiments, the electrolyte solids include the sulfide-based electrolytes, the weight percentage of the sulfide-based electrolytes in the electrolyte solids can be greater than 0wt% and less than or equal to 100wt%. Optionally, the weight percentage of the sulfide-based electrolytes in the electrolyte solids is 50-100wt%, further optionally, 80-100wt%, and still further optionally, 90-100wt%.

In any related embodiment in the aspects of the present application, the sulfide-based electrolytes can be the sulfide solid electrolytes without the coating layers.

In some embodiments, the thickness of the second coating sub-layer is 0.1-50 nm, optionally, 0.5-10 nm. Optionally, the thickness of the second coating sub-layer can be any one of the following thicknesses or an interval formed by any two of the following thicknesses: 0.1 nm, 0.2 nm, 0.3 nm, 0.4 nm, 0.5 nm, 0.6 nm, 0.8 nm, 0.9 nm, 1 nm, 1.2 nm, 1.5 nm, 1.6 nm, 1.8 nm, 2 nm, 2.5 nm, 3 nm, 3.5 nm, 4 nm, 5 nm, 6 nm, 7 nm, 7.5 nm, 8 nm, 8.5 nm, 9 nm, 9.5 nm, 10 nm, 15 nm, 20 nm, 25 nm, 30 nm, 35 nm, 40 nm, 45 nm, 50 nm, etc.

In some embodiments, the positive electrode active coated particles meet any one or more of the following characteristics (any numerical parameter in the following characteristic can also be selected from appropriate numerical value ranges here):
the weight percentage of the second coating sub-layer in the positive electrode active coated particles is 0.1-10wt%, optionally, 0.5-5wt%;
the weight percentage of the electrolyte solids in the second coating sub-layer can be 50-100wt%, optionally, 80-100wt%, and further optionally, 90-100wt%;
the weight percentage of the sulfide-based electrolytes in the electrolyte solids can be 0-100wt%, optionally, 50-100wt%, further optionally, 80-100wt%, and still further optionally, 90-100wt%; and
the thickness of the second coating sub-layer is 0.1-50 nm, optionally, 0.5-10 nm.

By adjusting at least one parameter of the weight percentage of the second coating sub-layers in the positive electrode active coated particles, the weight percentage of the electrolyte solids in the second coating sub-layers and the thickness of the second coating sub-layers within the above-mentioned range, a good and stable electric contact network can be formed, while the interface impedance can be better reduced, and furthermore, the solid-state battery can achieve higher discharge capacity, rate performance and cycle performance.

In some embodiments, both the positive electrode electrolyte particle and the second coating sub-layer include the sulfide electrolytes.

In some embodiments, one of the positive electrode electrolyte particle and the second coating sub-layer includes the sulfide electrolytes, while another one is optionally solid electrolyte.

In some embodiments, one of the positive electrode electrolyte particles and the second coating sub-layers includes the sulfide electrolytes, and the other one includes one or more selected from the group consisting of sulfide electrolytes, halide electrolytes, oxide electrolytes, polymer electrolytes, and the like.

The sulfide electrolytes can be arranged in the second coating sub-layers of the positive electrode active coated particles, can also be arranged in the positive electrode electrolyte particles, and can also be arranged at both positions. If one of the positive electrode electrolyte particle sand the second coating sub-layers is provided with the sulfide electrolytes, the type of the solid electrolytes in the other one can be not specially limited and can be flexibly selected according to requirements.

In some embodiments, the positive electrode electrolyte particles contain the sulfide electrolytes, while the positive electrode electrolyte particles include the sulfide-based electrolytes.

By arranging the sulfide electrolytes in the second coating sub-layers of the positive electrode active coated particles, the positive electrode active particles will have high ion conduction capability, such that the interfacial ion conduction can be greatly improved, and the electrochemical performance of the battery is improved.

Optionally, the electrolyte solids can include the sulfide-based electrolytes, and at the moment, the second coating sub-layers include the sulfide-based electrolytes, and the electrolyte solids include the sulfide-based electrolytes. The weight percentage of the sulfide-based electrolytes in the second coating sub-layers can be 0-100wt%. The weight percentage of the sulfide-based electrolytes in the second coating sub-layer can be any one of the following weight percentages or an interval formed by any two of the following weight percentages: 0wt%, 1wt%, 2wt%, 4wt%, 5wt%, 6wt%, 8wt%, 10wt%, 15wt%, 20wt%, 25wt%, 30wt%, 35wt%, 40wt%, 45wt%, 50wt%, 55wt%, 60wt%, 65wt%, 70wt%, 72wt%, 74wt%, 75wt%, 76wt%, 78wt%, 80wt%, 82wt%, 84wt%, 85wt%, 86wt%, 88wt%, 90wt%, 92wt%, 94wt%, 95wt%, 96wt%, 97wt%, 98wt%, 99wt%, 100wt%, etc. In some embodiments, the second coating sub-layers include the sulfide-based electrolytes, the second coating sub-layers include the sulfide-based electrolytes, and the weight percentage of the sulfide-based electrolytes in the second coating sub-layers can be 80-100wt%, optionally, 90-100wt%.

Optionally, the positive electrode electrolyte particles can include the sulfide-based electrolytes. The weight percentage of the sulfide-based electrolytes in the positive electrode electrolyte particles can be 0-100wt%. The weight percentage of the sulfide-based electrolytes in the second coating sub-layer can be any one of the following weight percentages or an interval formed by any two of the following weight percentages: 0wt%, 1wt%, 2wt%, 4wt%, 5wt%, 6wt%, 8wt%, 10wt%, 15wt%, 20wt%, 25wt%, 30wt%, 35wt%, 40wt%, 45wt%, 50wt%, 55wt%, 60wt%, 65wt%, 70wt%, 72wt%, 74wt%, 75wt%, 76wt%, 78wt%, 80wt%, 82wt%, 84wt%, 85wt%, 86wt%, 88wt%, 90wt%, 92wt%, 94wt%, 95wt%, 96wt%, 97wt%, 98wt%, 99wt%, 100wt%, etc. In some embodiments, the positive electrode electrolyte particles contain the sulfide-based electrolytes, and the weight percentage of the sulfide-based electrolytes in the positive electrode electrolyte particles can be 80-100wt%, optionally, 90-100wt%.

In some embodiments, the positive electrode active layer composition meets any one or more of the following characteristics (any numerical parameter in the following characteristic can also be selected from appropriate numerical value ranges here):
the second coating sub-layer includes the sulfide-based electrolytes, and the weight percentage of the sulfide-based electrolytes in the second coating sub-layer can be 80-100wt%, optionally, 90-100wt%; and
the positive electrode electrolyte particles include the sulfide-based electrolytes, and the weight percentage of the sulfide-based electrolytes in the positive electrode electrolyte particles is 80-100wt%, optionally, 90-100wt%.

By controlling at least one parameter of the weight percentage of the sulfide-based electrolytes in the second coating sub-layers and the weight percentage of the sulfide-based electrolytes in the positive electrode electrolyte particles within the above-mentioned range, the ion transmission of the positive electrode active material layer can be better improved, and furthermore, the interface impedance in the positive electrode active material layers is more favorably reduced.

In some embodiments, the mass ratio of the positive electrode electrolyte particles to the positive electrode active coated particles is 1-67%, optionally, 1-45%, optionally, 5-25%. Optionally, the mass ratio of the positive electrode electrolyte particles to the positive electrode active coated particles can be any one of the following percentages or can be selected from an interval formed by any two of the following percentages: 1%, 2%, 3%, 4%, 5%, 6%, 8%, 8.5%, 9%, 10%, 12%, 14%, 15%, 16%, 18%, 20%, 25%, 30%, 35%, 36%, 38%, 40%, 45%, and the like.

By controlling the mass ratio of the positive electrode electrolyte particles to the positive electrode active coated particles within the above-mentioned range, better integral electron and ion conduction capability can be provided, while high energy is realized.

In some embodiments, the oxide positive electrode active substances include the lithium transition metal oxides. In some embodiments, the oxide positive electrode active substances may include, but are not limited to, the lithium transition metal oxides.

Optionally, the weight percentage of the oxide positive electrode active substances (such as the lithium transition metal oxides) in the positive electrode active bodies can be greater than or equal to 50wt% (i.e., it can be ≥50wt%), further greater than or equal to 60wt%, even further greater than or equal to 80wt%, even further greater than or equal to 90wt%, even further greater than or equal to 95wt%, and even further greater than or equal to 100wt%. The weight percentage of oxide positive electrode active materials (such as the lithium transition metal oxides) in the positive electrode active bodies can also be any one of the following weight percentages or an interval formed by any two of the following weight percentages: 50wt%, 55wt%, 60wt%, 65wt%, 70wt%, 72wt%, 74wt%, 75wt%, 76wt%, 78wt%, 80wt%, 82wt%, 84wt%, 85wt%, 86wt%, 88wt%, 90wt%, 92wt%, 94wt%, 95wt%, 96wt%, 97wt%, 98wt%, 99w%, 100wt%, etc.

In some embodiments, the oxide positive electrode active substances (such as the lithium transition metal oxides) include one or more of a lithium cobaltate type positive electrode active substance, a high-nickel positive electrode active substance, a lithium-rich manganese-based positive electrode active substance and a modified form of any one of the positive electrode active substances; and the modified form can include one or more of doping modification and coating modification.

It is to be understood that the lithium cobaltate type positive electrode active material includes an element Li, an element Co, and an element O.

In some embodiments, the atomic molar ratio of the element Co to the element O is x2:2, and 0.9≤x2≤1. The x2 can also be any one of the following values or an interval formed by any two of the following values: 0.90, 0.91, 0.92, 0.93, 0.94, 0.95, 0.96, 0.97, 0.98, 1.00, etc.

In some embodiments, the atomic molar ratio of the element Co to the element Li is x2, and 0.9≤x2≤1. The x2 can also be any one of the following values or an interval formed by any two of the following values: 0.90, 0.91, 0.92, 0.93, 0.94, 0.95, 0.96, 0.97, 0.98, 1.00, etc.

Optionally, the lithium cobalt oxide type positive electrode active substance may include the element Li, the element Co and the element O, in which, the atom molar ratio of the element Li to the element Co to the element O is 1:x2:2, and 0.9≤x2≤1. The x2 can also be any one of the following values or an interval formed by any two of the following values: 0.90, 0.91, 0.92, 0.93, 0.94, 0.95, 0.96, 0.97, 0.98, 1.00, etc.

In some embodiments, the lithium cobaltate type positive electrode active substance includes the lithium transition metal oxides with the chemical formula of LiCoₓ₂R₁₋ₓ₂O₂, and R can be selected from one or more of elements of Ni, Mg, Ti, Cr, Nb, Fe and Ta.

Optionally, the high-nickel positive electrode active substance may include the element Li, the element Ni and the element O, in which, the atom molar ratio of the element Li to the element Ni to the element O is 1:y2:2, and 0.6≤y2≤1. Optionally, y2 can also be any one of the following numerical values or an interval formed by any two of the following numerical values: 0.6, 0.65, 0.7, 0.75, 0.8, 0.85, 0.90, 0.95, 0.96, etc. Optionally, y2 can also be any one of the following ranges: 0.8≤y2≤1, etc.

It is to be understood that the high-nickel positive electrode active material contains the element Li, the element Ni, and the element O.

In some embodiments, the atomic molar ratio of the element Ni to the element O is y2:2, and 0.6≤y2≤1. Optionally, y2 can also be any one of the following numerical values or an interval formed by any two of the following numerical values: 0.6, 0.65, 0.7, 0.75, 0.8, 0.85, 0.90, 0.95, 0.96, etc. Optionally, y2 can also be any one of the following ranges: 0.8≤y2≤1, etc.

In some embodiments, the atomic molar ratio of the element Ni to the element Li is y2, and 0.6≤y2≤1. Optionally, y2 can also be any one of the following numerical values or an interval formed by any two of the following numerical values: 0.6, 0.65, 0.7, 0.75, 0.8, 0.85, 0.90, 0.95, 0.96, etc. Optionally, y2 can also be any one of the following ranges: 0.8≤y2≤1, etc.

In some embodiments, the high-nickel positive electrode active material also contains the element (Co) and an element D besides the element (Ni), and the element D can be one or two of an element (Mn) and an element (Al). Meanwhile, the atomic number of the element Ni relative to the element Li is y2. In some embodiments, y2≥0.6, further optionally, y2≥0.8, and further optionally, y2≥0.9. The y2 can also be any one of the following values or any one of the following values ≥ (greater than or equal to) and less than 1, or an interval formed by any two of the following values: 0.6, 0.7, 0.8, 0.9, 0.93, etc. The y2 can also be any one of the following ranges: 0.6≤y2<1, 0.6≤y2≤1, 0.6≤y2≤0.95, 0.6≤y2≤0.94, 0.6≤y2≤0.93, 0.7≤y2<1, 0.7≤y2≤1, 0.7≤y2≤0.95, 0.7≤y2≤0.94, 0.7≤y2≤0.93, 0.8≤y2<1, 0.8≤y2≤1, 0.8≤y2≤0.95, 0.8≤y2≤0.94, 0.8≤y2≤0.93, 0.83≤y2<1, 0.83≤y2≤1, 0.83≤y2≤0.95, 0.83≤y2≤0.94, 0.83≤y2≤0.93, etc.

In some embodiments, the high-nickel positive electrode active material includes the lithium transition metal oxides with the chemical formula of LiNi_{y2}Co_{z2}D_{1-y2-z2}O₂, 0≤z2≤0.4, and 0.6≤(y2+z2)≤1, and D can be selected from one or more elements of Mn, Al, Zr, La, Ce, Ti, Mg, Nb, Ta, Mo, and W. In some embodiments, D includes one or two of the element Mn and the element Al, further, D can be selected from any one of the element Mn and the element Al. In some embodiments, D includes the element Mn, further, D can be the element Mn. Optionally, z2 can be any one of the following values or an interval formed by any two of the following values: 0, 0.1, 0.15, 0.2, 0.25, 0.3, 0.35, 0.36, 0.38, 0.39, 0.4, etc.

Optionally, the lithium-rich manganese-based positive electrode active material contains the element Li, the element Mn, and the element O, and the atomic molar ratios of the element Li to the element Mn to the element O is (1+p): (p+r(1-p)): (2+p), and 0<p≤1, 0≤r≤1. Optionally, p can be any of the following values, or an interval formed by any two of the following values, or greater than 0 and less than or equal to any of the following values: 0.01, 0.02, 0.04, 0.05, 0.06, 0.08, 0.1, 0.12, 0.14, 0.15, 0.16, 0.18, 0.2, 0.22, 0.24, 0.25, 0.26, 0.28, 0.3, 0.32, 0.35, 0.36, 0.38, 0.4, 0.42, 0.44, 0.45, 0.46, 0.48, 0.5, 0.55, 0.6, 0.65, 0.7, 0.75, 0.8, 0.85, 0.9, 0.92, 0.94, 0.95, 0.96, 0.97, 0.98, 0.99, 1, etc. Optionally, r can be any one of the following values or an interval formed by any two of the following values: 0, 0.1, 0.2, 0.3, 0.4, 0.5, 0.6, 0.7, 0.8, 0.9, 1, etc. The p can also be selected from any of the following ranges: 0.2≤p≤1.

In some embodiments, the lithium-rich manganese-based positive electrode active substance includes the lithium transition metal oxides with the chemical formula of pLi₂MnO₃·(1-p)LiZO₂, and Z can be selected from but not limited to one or more elements of nickel (Ni), cobalt (Co), manganese (Mn), chromium (Cr), iron (Fe), aluminum (Al), niobium (Nb), molybdenum (Mo), and ruthenium (Ru).

As an optional example of the oxide positive electrode active substances, the lithium transition metal oxides such as the lithium cobalt oxide type positive electrode active substance, the high-nickel positive electrode active substance, and the lithium-rich manganese-based positive electrode active substance easily release oxygen under high working voltage, and if the lithium transition metal oxides are used as the positive electrode active substances in the positive electrode active particles, the positive electrode active layer composition can be arranged in the positive electrode active material layer, such that high energy density and long cycle performance of the solid-state battery can be realized while the positive electrode releases oxygen.

If the positive electrode active material layer includes the above-mentioned positive electrode active coated particles, the oxygen release of the positive electrode material can be further inhibited, the crystal structure stability of the positive electrode active particles during battery cycle can be improved, the generation of a surface rock salt phase is inhibited, the positive electrode capacity is fully exerted, and the long-cycle performance of the battery is improved.

In some embodiments, the oxide positive electrode active substances include one or more selected from the group consisting of lithium-cobalt oxides, lithium-nickel oxides, lithium-manganese oxides, lithium-nickel-cobalt oxides, lithium-manganese-cobalt oxides, lithium-nickel-manganese oxides, lithium-nickel-cobalt-manganese oxides, lithium-nickel-cobalt-aluminum oxides, lithium-rich manganese positive electrode active substances, and any one of above lithium transition metal oxides in modification forms; the lithium-rich manganese positive electrode active substances have a chemical formula of pLi₂MnO₃·(1-p)LiZO₂, Z is one or more elements selected from the group consisting of Ni, Co, Mn, Cr, Fe, Al, Nb, Mo, and Ru, 0<p≤1; and the modification forms include one or more of doping modification and coating modification.

By means of the structural design of introducing the positive electrode active coated particles in the positive electrode active particles containing different types of above-mentioned oxide positive electrode active substances (such as the lithium transition metal oxides), the effects of improving the discharge capacity, rate performance and cycle performance of the solid-state battery can be achieved.

In some embodiments, the Dᵥ50 of the coated electrolyte particles is 1 nm-20 µm, optionally, 50 nm-5 µm; and the Dᵥ50 represents the particle size corresponding the cumulative volume distribution percentage of the multi-particle mixture reaching 50%. The Dᵥ50 or particle size of the positive electrode electrolyte particles can be selected from any one of the following sizes or an interval formed by any two of the following sizes: 1 nm, 5 nm, 10 nm, 20 nm, 50 mn, 60 nm, 80 nm, 100 nm (0.1 µm), 0.2 µm, 0.3 µm, 0.4 µm, 0.5 µm, 0.6 µm, 0.8 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 16.5 µm, 17 µm, 17.5 µm, 18 µm, 18.5 µm, 19 µm, 19.5 µm, 20 µm, etc.

As described in the present application, the particle sizes of the materials can be characterized by the volume cumulative distribution of the particle size DᵥN (N represents any value selected from 0-100), which refers to the particle size corresponding to the cumulative volume distribution percentage of the material reaching N%, and the volume proportion of the materials with the particle sizes less than or equal to DᵥN is N%. DᵥN can be obtained from a cumulative volume distribution curve of the particle sizes of the materials, unless otherwise specified, in the cumulative volume distribution curve, it accumulates from zero on the small particle size side. Dᵥ50 is taken as an example for description. In the present application, unless otherwise specified, Dᵥ50 refers to the particle size corresponding to the cumulative volume distribution percentage of the material reaching 50%, and this parameter indicates that the particle sizes of the materials accounting for 50% by volume are less than or equal to Dᵥ50, and the particle sizes of the materials accounting for 50% by volume are greater than Dᵥ50. Those skilled in the art can understand the meaning of Dᵥ50 and can use commonly known instruments and methods in the field to measure it. For example, testing can be conveniently performed by a laser particle size analyzer, such as Mastersizer 2000E laser particle size analyzer from Malvern Instruments Ltd. (UK) or the LS-909 laser particle size analyzer (Omec), with reference to a GB/T 19077-2016 particle size distribution laser diffraction method. Further, the device models such as the Malvern 2000 (MasterSizer 2000) laser particle size analyzer can be used for testing according to the standard procedures GB/T19077-2016/ISO 13320:2009.

In the present application, unless otherwise specified, the "particle size" refers to the maximum diameter of the particles in each direction. In an optional example, the particles involved in the present application are, for example, positive electrode electrolyte particles, positive electrode active particles, and positive electrode active coated particles.

In the present application, the particle sizes of the positive electrode electrolyte particles, the positive electrode active particles, and the positive electrode active coated particles can be tested and analyzed by particle size analysis methods such as the transmission electron microscope (TEM) and a laser particle analyzer. These testing methods can also be used for testing and analyzing parameters such as particle size, particle size distribution, and average values of certain size parameters of other particulate materials involved in the present application (such as raw materials used for providing the particle bodies).

By adjusting Dᵥ50 or particle size of the positive electrode electrolyte particles within above-mentioned range, the interface contact between the positive electrode layer and a battery layer is better improved while the overall ion conduction capability of the positive electrode electrolyte particles is achieved, furthermore, the electrochemical performance of the battery is better improved, and the manufacturing cost can be controlled. The relatively small particle size of the positive electrode electrolyte particles is conducive to improving the electric contact between the positive electrode active substances in the positive electrode active particles, and thus the capacity of the solid-state battery can be promoted to be exerted and the rate performance can be improved. The positive electrode electrolyte particles with the relatively moderate Dᵥ50 or particle sizes are easier to manufacture.

In some embodiments, Dᵥ50 or particle size of the positive electrode active coated particles is 0.1-20 µm, optionally, 1-10 µm; and the Dᵥ50 represents the particle size corresponding to the cumulative volume distribution percentage of a multi-particle mixture reaching 50%. The Dᵥ50 or particle size of the positive electrode active coated particles can be selected for any one of the following sizes or an interval formed by any two of the following sizes: 0.1 µm, 0.2 µm, 0.3 µm, 0.4 µm, 0.5 µm, 0.6 µm, 0.8 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 16.5 µm, 17 µm, 17.5 µm, 18 µm, 18.5 µm, 19 µm, 19.5 µm, 20 µm, etc.

By controlling Dᵥ50 or particle size of the positive electrode active coated particles within above-mentioned range, the discharge capacity of the positive electrode active substances can be improved, and good contact between the positive electrode active substances and the sulfide electrolytes in the composite positive electrode can be maintained. Ion transmission paths in the positive electrode active substances with smaller sizes are shorter, which is conducive to improving the discharge capacity of the positive electrode active substances; and the positive electrode active substances with larger sizes can be better coated with the sulfide-based electrolytes, so that the interface contact with the sulfide solid electrolytes is better, and the cycle performance of the battery is facilitated. The positive electrode materials with relatively moderate sizes can enable the solid-state battery to have high discharge capacity and excellent cycle performance.

In a second aspect, the present application provides the positive electrode active coated particles, which are the positive electrode active coated particles in the positive electrode active layer composition described in the first aspect of the present application, and the second coating sub-layers contain the sulfide electrolytes.

The positive electrode active coated particles can be applied to the positive electrode active material layer of the solid-state battery, such that the corresponding sulfide solid-state battery has good discharge capacity, rate performance and cycle performance.

In a third aspect, the present application provides the positive electrode film.

In some embodiments, a positive electrode film is provided and includes the positive electrode current collector and the positive electrode active material layer located on at least one side of the positive electrode current collector, and the positive electrode active material layer includes the positive electrode active layer composition described in the first aspect of the present application.

In some embodiments, a positive electrode film is provided and includes the positive electrode current collector and the positive electrode active material layer located on at least one side of the positive electrode current collector, and the positive electrode active material layer includes the positive electrode active coated particles described in the second aspect of the present application.

Optionally, the positive electrode film can be an independent positive electrode film sheet or positive electrode plate, and can be used for assembling the solid-state battery; the positive electrode film can also be a positive electrode film layer in a multi-layer composite structure, for example, the composition materials of the positive electrode film layer can be pressed into the film on the surface of the solid electrolyte layer. As an optional example, the positive electrode film can be the positive electrode layer of the solid-state battery or a part of the positive electrode layer.

In another aspect, the present application provides the positive electrode active material layer, which is the positive electrode active material layer described in any one of embodiments of the present application.

As defined previously, the positive electrode active material layer includes at least the positive electrode active particles, and the positive electrode active particles contain the positive electrode active substances. It is to be understood that the positive electrode active particles includes the above-mentioned positive electrode active coated particles.

Optionally, the weight proportion of the positive electrode active particles in the positive electrode active material layer can be 70wt%-99wt%, optionally, 80wt%-95wt%. Optionally, the weight proportion of the positive electrode active coated particles in the positive electrode active material layer can be 70wt%-99wt%, optionally, 80wt%-95wt%. The weight proportion of the positive electrode active particles or the positive electrode active coated particles in the positive electrode active material layer can be any one of the following weight percentages or an interval formed by any two of the following weight percentages: 70wt%, 72wt%, 74wt%, 75wt%, 76wt%, 78wt%, 80wt%, 82wt%, 84wt%, 85wt%, 86wt%, 88wt%, 90wt%, 92wt%, 94wt%, 95wt%, 96wt%, 97wt%, 98wt%, 99wt%, etc.

In some embodiments, the positive electrode active material layer includes the positive electrode electrolyte particles. Optionally, the weight ratio of the positive electrode electrolyte particles in the positive electrode active material layers can be 0.1-30wt%, optionally, 5-20wt%, and the weight ratio of the positive electrode electrolyte particles in the positive electrode active material layers can also be any one of the following weight percentages or an interval formed by any two of the following weight percentages: 0.1wt%, 0.2wt%, 0.4wt%, 0.5wt%, 0.6wt%, 0.8wt%, 1wt%, 1.2wt%, 1.5wt%, 1.6wt%, 1.8wt%, 2wt%, 2.5wt%, 3wt%, 3.5wt%, 4wt%, 5wt%, 6wt%, 7wt%, 8wt%, 9wt%, 10wt%, 12wt%, 14wt%, 15wt%, 16wt%, 18wt%, 20wt%, 22wt%, 24wt%, 25wt%, 26wt%, 28wt%, 30wt%, and the like.

In some embodiments, the positive electrode active material layers include the positive electrode active particles and the positive electrode electrolyte particles, in which, the positive electrode active particles include the positive electrode active coated particles.

In some embodiments, the positive electrode active material layer meets one or more of the following characteristics (any numerical parameter in the following characteristic can also be selected from appropriate numerical value ranges here).
the weight percentage of the positive electrode active coated particles in the positive electrode active material layer is 70-99wt%, optionally, 80-95wt%; and
the weight percentage of the positive electrode electrolyte particles in the positive electrode active material layer is 0.1-30wt%, optionally 5-20wt%.

By controlling the weight percentage of the positive electrode active coated particles in the positive electrode active material layer within the above-mentioned range, both the high energy density and cycle stability can be achieved.

By controlling the weight percentage of the positive electrode electrolyte particles in the positive electrode active material layer within the above-mentioned range, better integral ion conduction capability can be provided.

In some embodiments, the positive electrode active material layer further includes one or both of a binder and a conductive agent.

In some embodiments, the positive electrode film meets any one or more of the following characteristics (any numerical parameter in the following characteristic can also be selected from appropriate numerical value ranges here):
the weight percentage of the binder in the positive electrode active material layer is 0.1-5wt%; and
the weight percentage of the conductive agent in the positive electrode active material layer is 0.1-5wt%.

In some embodiments, the positive electrode active material layer includes a conductive agent (which can be marked as a positive electrode conductive agent). As an optional example, the positive electrode conductive agent can be a carbon conductive agent. Optionally, the carbon conductive agent can include one or more of superconducting carbon, acetylene black, carbon black, Ketjen black, carbon dots, carbon nanotubes, grapheme, and carbon nanofibers. In some embodiments, the positive electrode conductive agent can include, but is not limited to, one or more of SP, KS-6, acetylene black, Ketjen black ECP with a branched chain structure, SFG-6, vapor-grown carbon fibers VGCF, carbon nanotubes (CNTs), graphene and the like. Optionally, the weight percentage of the positive electrode conductive agent in the positive electrode active material layer can be 0-10wt%, further, 0-8wt%, further, 0-5wt%, and further, 0.1-3wt%, based on the total weight of the positive electrode active material layer. The weight percentage of the positive electrode conductive agent in the positive electrode active material layer can also be 0.1-5wt%, 0.2-5wt%, 0.5-5wt%, 0.1-3wt%, and the like. If the positive electrode material is prepared into the positive electrode active material layer by a dry method, the positive electrode conductive agent can be arranged in the positive electrode material, such that the electron conduction capability of the positive electrode active material layer can be improved.

In some embodiments, the positive electrode active material layer optionally includes a binder. As an optional example, the binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylate resin. Generally, the weight percentage of the binder in the positive electrode active material layer can be 0-10wt%, further 0-8wt%, further 0.1-5wt%, and further 1-5wt% based on the total weight of the positive electrode active material layer. If the positive electrode materials are prepared into positive electrode slurry by a wet method and then the positive electrode active material layer is prepared, the binder can be arranged in the positive electrode slurry to assist film formation, and moreover, a good electric contact network can be promoted to be formed among the active particles in the positive electrode active material layer.

The following are some descriptions of the positive electrode film.

In the present application, unless otherwise specified, the "positive electrode film" is a film which can be used as the positive electrode of the solid-state battery and includes at least the positive electrode active material layer and usually also includes a positive electrode current collector. The positive electrode film includes the positive electrode active material layer described in the second aspect of the present application.

In some embodiments, the positive electrode film includes the positive electrode current collector and the positive electrode active material layer arranged on at least one surface of the positive electrode current collector, and the definition of the positive electrode active material layer can refer to above.

In some embodiments, FIG. 8 can be referred to, and the positive electrode film 20 includes the positive electrode current collector 210 and the positive electrode active material layer 220 located on one side of the positive electrode current collector 210.

In some embodiments, FIG. 9 can be referred to, and the positive electrode film 20 includes the positive electrode current collector 210 and the positive electrode active material layer 220 located on both sides of the positive electrode current collector 210.

Optionally, in the positive electrode film or the positive electrode layer, the thickness of the positive electrode active material layer is 30-400 µm, optionally, 60-130 µm, and it can also be any one of the following thicknesses or an interval formed by any two of the following thicknesses: 30 µm, 40 µm, 50 µm, 60 µm, 80 µm, 100 µm, 120 µm, 130 µm, 140 µm, 150 µm, 160 µm, 180 µm, 200 µm, etc. The thickness of the positive electrode active material layer can be any one of the following ranges: 40-400 µm, 40-300 µm, 40-200 µm, 40-150 µm, 40-130 µm, 40-120 µm, 50-400 µm, 50-300 µm, 50-200 µm, 50-150 µm, 50-130 µm, 50-120 µm, 60-400 µm, 60-300 µm, 60-200 µm, 60-150 µm, 60-120 µm, 80-400 µm, 80-300 µm, 80-200 µm, 80-150 µm, 80-120 µm, 100-200 µm, 120-260 µm, etc.

In the present application, unless otherwise specified, the "thickness of the positive electrode active material layer" in the positive electrode film refers to the total thickness in the positive electrode film. If the positive electrode active material layers are arranged on both sides of the positive electrode current collector, the thickness of the positive electrode active material layer refers to the sum of the thicknesses of the two sides.

As an optional example, the positive electrode current collector has two surfaces which are deviated from each other in the thickness direction, and the positive electrode active material layer is arranged on any one or both of the two surfaces, which are deviated from each other, of the positive electrode current collector.

In some embodiments, the positive electrode active substances in the positive electrode active particles include the oxide positive electrode active substances, further, the positive electrode active substances include the lithium transition metal oxides.

Optionally, the oxide positive electrode active materials (such as the lithium transition metal oxides) in the positive electrode active materials may include but are not limited to the lithium transition metal oxides that are known in this art for the positive electrode active materials in the solid-state batteries, but not limited thereto. The examples of the lithium transition metal oxides may include, but are not limited to, one or more of lithium-cobalt oxides, lithium-nickel oxides, lithium-manganese oxides, lithium-nickel-cobalt oxides, lithium-manganese-cobalt oxides, lithium-nickel-manganese oxides, lithium-nickel-cobalt-manganese oxides, lithium-nickel-cobalt-aluminum oxides, and their modified compounds. The optional examples of the lithium-cobalt oxides may include LiCoO₂; the optional examples of the lithium-nickel oxides may include LiNiO₂; the optional examples of the lithium manganese oxides may include LiMnO₂, LiMn₂O₄, etc.; the optional examples of the lithium-nickel-cobalt-manganese oxides may include LiNi_{1/3}Co_{1/3}Mn_{1/3}O₂ (also known as NCM₃₃₃), LiNi_{0.5}Co_{0.2}Mn_{0.3}O₂ (also known as NCM₅₂₃), LiNi_{0.5}Co_{0.25}Mn_{0.25}O₂ (also known as NCM₂₁₁), LiNi_{0.6}Co_{0.2}Mn_{0.2}O₂ (also known as NCM₆₂₂), LiNi_{0.8}Co_{0.1}Mn_{0.1}O₂ (also known as NCM₈₁₁), etc. The optional examples of the lithium-nickel-cobalt-aluminum oxides may include LiNi_{0.80}Co_{0.15}Al_{0.05}O₂.

Taking a solid-state battery with active ions including lithium ions as an example, it is to be understood that during the charging and discharging process of the solid-state battery, the lithium (Li) will intercalate and deplete, and the Li content in the positive electrode layer (including the positive electrode film here) varies when the battery is discharged to different states. In the exemplary descriptions of the positive electrode active material in the present application, unless otherwise specified, the Li content can refer to the initial state of the material or a non-initial state after charge-discharge cycles. The positive electrode active material is applied to the positive electrode layer of the solid-state battery system, and after charge-discharge cycling, the Li content in the positive electrode active material within the positive electrode layer typically changes. The Li content may be measured in atomic mole content, but is not limited thereto. In the "Li content refers to the initial state of the material", the initial state of the material refers to the state before placed in the positive electrode layer. It is to be understood that new materials or substances obtained by appropriately modifying the listed positive electrode active materials also fall within the scope of positive electrode active materials, and such appropriate modifications refer to acceptable modification methods for the positive electrode active material, the optional examples include coating modifications. In the exemplary descriptions of the positive electrode active material in the present application, the oxygen (O) content is usually the theoretical value, and oxygen release from the lattices will cause the atomic mole content of oxygen to change, so the actual O content may fluctuate. The O content can also be measured in atomic mole content, but is not limited thereto.

In some embodiments, besides the oxide positive electrode active materials (such as the lithium transition metal oxides), the positive electrode active materials may also include other positive electrode active materials known in the art that can be used in the solid-state batteries. As an optional example, other positive electrode active materials that can be used in the solid-state batteries may include one or more of the following materials: lithium-contained phosphates with an olivine structure and their modified compounds. However, the present application is not limited to these materials, and other known materials that can be used as the positive electrode active materials for the solid-state batteries may also be used. These positive electrode active materials may be used alone or in combination of two or more. The optional examples of the lithium-containing phosphates with the olivine structure may include, but are not limited to, one or more of lithium iron phosphate, lithium iron phosphate-carbon composites, lithium manganese phosphate, lithium manganese phosphate-carbon composites, lithium manganese iron phosphate, and lithium manganese iron phosphate-carbon composites. The examples of lithium iron phosphate include LiFePO₄ (also known as LFP). The examples of lithium manganese phosphate include LiMnPO₄.

In some embodiments, the lithium transition metal oxides include one or more of lithium cobalt oxides, lithium nickel oxides, lithium manganese oxides, lithium-nickel-cobalt oxides, lithium-manganese-cobalt oxides, lithium-nickel-manganese oxides, lithium-nickel-cobalt-manganese oxides, lithium-nickel-aluminum-cobalt oxides, lithium manganese-rich positive electrode active substances (the definition can be referred to the following) and any one of the modification forms of the positive electrode active substances; and the modification forms can include one or more of doping modification and coating modification.

Optionally, the positive electrode active material layer may include the positive electrode active particles, the positive electrode electrolyte particles, the positive electrode conductive agent, and the binder. The types and contents of each component can be referred to in the context in the present application.

In the present application, unless otherwise specified, samples of the positive electrode active material layer can be obtained from the solid-state battery in the following manner: the battery can be disassembled to obtain samples of the active material layer of an electrode plate; further analysis on the active material layer can be performed using the following methods: the FIB-SEM nanoscale spatial dynamic resolution and layer-by-layer cutting technology are utilized to reconstruct the three-dimensional structure of the sample; in combination with EDS elemental spectroscopy, the distribution and proportion of each element can be obtained; and finally, the composition and thickness of each structural layer of the active material layer can be obtained through software-based quantitative analysis.

In the present application, unless otherwise specified, the types and contents of components such as the positive electrode active particles (including the positive electrode active coated particles) and the positive electrode electrolyte particles in the positive electrode active material layer of the solid-state battery can be detected by the following methods: the structure and composition of the positive electrode active material layer can be analyzed and tested by focused ion beam (FIB) technology, scanning electron microscopy (SEM), and elemental analysis techniques; for example, it can be obtained by a combination of cryo-focused ion beam (FIB) serial slicing, cross-sectional SEM morphology observation and energy-dispersive spectroscopy (EDS) elemental energy spectrum and three-dimensional reconstruction analysis software for analysis. For example, the cryo-focused ion beam (FIB) can be used for finely slicing the sample layer by layer along the transverse direction at different thickness positions (with the smallest scale reaching nanometer-thin slices) and separating to obtain samples from different layers at various positions through the thickness; the scanning electron microscopy (SEM) can then be used for analyzing the morphology, structure, and element distribution of each cross-section under continuous FIB slicing; and in combination with three-dimensional structural reconstruction software, the three-dimensional structure of the sample can be reconstructed, and the mass and/or volume of different regions of the to-be-tested sample are estimated. As an optional example, the above parameter analysis can be performed by an FEI Scios 2HiVac device.

In the present application, unless otherwise specified, the particle sizes and the particle size distribution of each solid particle in the positive electrode active material layer sample of the solid-state battery can be analyzed by the following mode, and the analysis may include the analysis for the particle size and the particle size distribution of particle components such as the positive electrode active particles and the positive electrode electrolyte particles; in the present application, unless otherwise specified, FIB-SEM and EDS can be combined to test to obtain two-dimensional images with different colors on different components, the particle components such as the positive electrode active particles and the positive electrode electrolyte particles can be distinguished according to component types, and the particle size and the particle size distribution of the particle components such as the positive electrode active particles and the positive electrode electrolyte particles can be obtained by analyzing by the built-in software of the EDS instrument.

In some embodiments, the positive electrode current collector can be a metal foil or a composite current collector. For example, if it is the metal foil, an aluminum foil can be adopted. In the positive electrode current collector, the composite current collector can include a high molecular substrate layer and a metal layer formed on at least one surface of the high molecular substrate layer. In the positive electrode current collector, the composite current collector can be obtained by forming a metal material on the high polymer material substrate. In the positive electrode current collector, the optional example of the metal material can include at least one of aluminum, an aluminum alloy, nickel, a nickel alloy, titanium, a titanium alloy, silver, a silver alloy and the like. In the positive electrode current collector, the optional example of the high polymer material substrate can include one or more of polypropylene (PP), polyethylene terephthalate (PET), polybutylene terephthalate (PBT), polystyrene (PS), polyethylene (PE) and the like.

The positive electrode film can be prepared by the dry method or wet method. For example, the film can be formed by dry pressing. For another example, wet coating and drying film formation can be carried out.

In some embodiments, the positive electrode film sheet (it can be used as a positive electrode plate) can be prepared by the following steps: performing dry-state mixing on each component for preparing the positive electrode film sheet, such as the positive electrode active particles, the positive electrode electrolyte particles, the positive conductive agent, the binder, and any other component, then heating, pressurizing and kneading the uniformly mixed material to form a bulk material, performing hot rolling to form a self-support positive electrode plate, and performing hot rolling and combination on the self-support positive electrode plate and a positive electrode current collector to obtain the positive electrode film sheet, in which, the self-support positive electrode plate can be combined with at least one side (single side or both sides) of the positive electrode current collector. Optionally, a double planetary stirrer can be used for performing dry-state mixing. Optionally, an internal mixer can be used for performing heating, pressurizing and kneading. Optionally, the temperature for hot rolling can be 75-85°C, further 78°C, 80°C, 82°C and the like. A method for assembling the solid-state battery by the positive electrode film sheet can be suitable for industrial mass production.

In some embodiments, the positive electrode film sheet can be prepared by the following steps: dispersing each component for preparing the positive electrode film sheet, such as the positive electrode active particles, the positive electrode electrolyte particles, the positive conductive agent, the binder and any other component, into an organic solvent to form positive electrode slurry. Further, the positive electrode slurry is coated on at least one side surface of the positive electrode current collector, and subjected to the processes of drying, cold pressing and the like to obtain the positive electrode film sheet. The cold pressing can be performed by a cold rolling mill. The organic solvent in the positive electrode slurry can include one or more of paraxylene, trimethylbenzene, butyl butyrate, heptane and the like, and further can be paraxylene. The surface of the positive electrode current collector coated with the positive electrode slurry can be a single surface of the positive electrode current collector or both surfaces of the positive electrode current collector. The solid content of the positive electrode slurry can be 40-80wt%. The viscosity of the positive electrode slurry at a room temperature can be adjusted to 5,000-25,000 mPa•s. The coating unit area density (except the solvent) based on dry weight can be 15 mg/cm²-35 mg/cm² during coating of the positive electrode slurry. The compaction density of the positive electrode film sheet can be 3.0 g/cm³-3.6 g/cm³, optionally 3.3 g/cm³-3.5 g/cm³.

The "compaction density" used in the present application has a meaning well-known in the field and is one of the reference indicators of the material energy density. In the present application, unless otherwise specified, the compaction density of the electrode layer refers to the ratio of the mass of the electrode active material layer to its volume. The compaction density of the positive electrode layer, the positive electrode plate, the positive electrode film sheet, or the positive electrode film refers to the ratio of the mass of the positive electrode active material layer to its volume, while the compaction density of the negative electrode layer, the negative electrode plate, the negative electrode assembly, or the negative electrode film refers to the ratio of the mass of the negative electrode active material layer to its volume.

In another aspect, the present application provides a positive electrode film sheet, which includes the positive electrode current collector and the positive electrode active material layer located on at least one side of the positive electrode current collector, and the positive electrode active material layer is the positive electrode active material layer described in the second aspect of the present application.

The positive electrode film sheet can be directly used as the positive electrode plate to be assembled into the solid-state battery, but not limited thereto.

In a fourth aspect, the present application provides a solid-state battery, including a positive electrode layer, a solid electrolyte layer, and a negative electrode layer;
the positive electrode layer includes at least one of the positive electrode active layer composition described in the first aspect of the present application, the positive electrode active coated particles described in the second aspect of the present application, and the positive electrode film described in the third aspect of the present application.

In a fifth aspect, the present application provides the electrical apparatus, which includes at least one selected from the group consisting of the positive electrode film described in the third aspect of the present application and the solid-state battery described in the fourth aspect of the present application.

Disclosed is an application of the positive electrode active layer composition described in the first aspect of the present application, the positive electrode active coated particles described in the second aspect of the present application, or the positive electrode film described in the third aspect of the present application in preparation of the solid-state battery.

In any related embodiments in all aspects, the solid-state battery may be a sulfide solid-state battery. The definition of the sulfide solid-state battery can be referred to above.

In any related embodiments in all aspects, the solid-state battery may be a sulfide all-solid-state battery. The definition of the sulfide all-solid-state battery can be referred to above.

In the present application, the electrochemical performance of the battery, unless otherwise specified, generally includes the overall performance in terms of discharge capacity, rate performance, and cycle performance.

The solid-state battery includes at least one solid-state battery cell. The solid-state battery can include one or more solid-state battery cells.

In the present application, unless otherwise specified, the "solid-state battery cell" refers to a basic unit capable of transforming chemical energy and electrical energy into each other, with all components being solid-state. In some embodiments, the solid-state battery cell may be an all-solid-state battery cell.

Optionally, the solid-state battery cell (which can be the all-solid-state battery cell) can include the positive electrode layer, the solid electrolyte layer, and the negative electrode layer, and the solid electrolyte layer is positioned between the positive electrode layer and the negative electrode layer. During the charging and discharging process of the battery, active ions are intercalated and de-intercalated between the positive and negative electrode layers. The solid electrolyte layer has an effect of conducting ions between the positive and negative electrode layers, and it can also separate the positive and negative electrode layers so as to prevent the positive and negative electrodes from short circuits.

Unless otherwise specified, the positive electrode layer in the solid-state battery includes the positive electrode film described in the first aspect of the present application. It can be composed solely of the positive electrode film described in the first aspect of the present application, or the positive electrode film described in the first aspect of the present application can be combined with other films suitable for the positive electrode to form the positive electrode layer.

The following are some descriptions of the solid electrolyte layer.

The solid electrolyte layer has an effect of conducting ions between the positive and negative electrode layers, and it can also separate the positive and negative electrode layers so as to prevent the positive and negative electrodes from short circuits.

It is to be understood that the solid electrolyte layer includes the solid electrolyte. The solid electrolyte in the solid electrolyte layer can be the solid electrolyte known in the field for use in the solid-state battery.

The types of solid electrolytes in different film layers of the solid-state battery can be the same or different. For example, the solid electrolytes in the positive electrode electrolyte particles and the solid electrolyte layer can be the same or different.

As an optional example, the solid electrolytes in the positive electrode electrolyte particles and the solid electrolyte layer can independently include one or more of the following materials: sulfide solid electrolytes, halide solid electrolytes, oxide solid electrolytes, polymer solid electrolytes, and the like. The type of sulfide solid electrolyte in the solid electrolyte layer may be the same as or different from that in the positive electrode layer (such as the above-mentioned positive electrode film). Taking sulfide solid electrolytes as an example, the sulfide solid electrolytes refer to a solid electrolyte containing sulfide electrolyte components, that is, the sulfide solid electrolytes are sulfide-based electrolytes.

As another optional example, the solid electrolytes in the positive electrode electrolyte particles and the solid electrolyte layer can independently include, but are not limited to, one or more of the oxide solid electrolytes, sulfide solid electrolytes, and halide solid electrolytes. In some of these embodiments, the solid electrolytes in the positive electrode electrolyte particles and the solid electrolyte layer may independently include, but are not limited to, one or more of the Argyrodite-type sulfide electrolytes and halide electrolytes. In which, the optional examples of the oxide solid electrolytes can include LISICON type oxide electrolytes (such as γ-Li₃PO₄), NASICON type oxide electrolytes (such as Li₁₊ₓAlₓGe₂₋ₓ(PO₄)₃, and Li₁₊ₓAlₓTi₂₋ₓ(PO₄)₃, 0≤x≤1), Garnet type (such as Li₇La₃Zr₂O1₂), and Perovskite type oxide electrolytes (such as Li₃ₓLa_{2/3-x}TiO₃, 0≤x≤0.5). The optional examples of the sulfide solid electrolytes can include one or more of Li₁₀GeP₂S₁₂, Li₂S-P₂S₅, Argyrodite type (such as Li₆PS₅Cl, and Li_{5.5}PS_{5.5}Cl_{1.5}). The optional examples of the halide solid electrolytes can include one or more of Li₃InCl₆, Li₃YCl₆, Li₃ScCl₆, Li₃ErCl₆, Li₂ZrCl₆, etc.

In some implementations, the solid electrolyte layer can be pressed from the solid electrolyte material into the solid electrolyte film sheet.

In some embodiments, the thickness of the solid electrolyte layer can be 0.1-1,000 µm, optionally, 10-100 µm, 100-800 µm, 500-800 µm, etc.

The following are some descriptions of the negative electrode layer.

The negative electrode layer can be provided by the negative electrode plate or negative electrode film sheet suitable for use in solid-state battery in the field, or the materials of the negative electrode layer can be directly pressed onto the surface of one side of the solid electrolyte layer to form the negative electrode film layer. The negative electrode film sheet can be combined with other films suitable for negative electrodes to form the negative electrode plate or negative electrode layer.

The negative electrode layer can be prepared by either a dry or wet method. For example, the film can be formed by dry pressing. For another example, it can be coated into a film using the wet method.

The negative electrode layer includes a negative electrode active material layer, and the negative electrode active material layer includes negative electrode active particles, which contain negative electrode active materials.

Optionally, the negative electrode active particles or negative electrode active materials can account for ≥80wt% of the negative electrode active material layer, and further, ≥90wt%.

In some implementations, the negative electrode active particles or negative electrode active materials are lithium-indium alloy (InLi alloy).

In some embodiments, the negative electrode layer is made of an InLi alloy film.

In some embodiments, the negative electrode active materials may also be the negative electrode active materials known in the art for use in the solid-state batteries. As an optional examples, the negative electrode active substances may include one or more of the following materials: elemental silicon, elemental tin, silicon-carbon negative electrodes (silicon-carbon composites), silicon monoxide, graphite, or metallic lithium. However, the present application is not limited to these materials or substances, and other conventional materials that can be used as the negative electrode active materials for batteries may also be used. These negative electrode active materials can be used individually or in combination of two or more.

In some embodiments, the negative electrode plate or negative electrode film sheet may include a negative electrode current collector and a negative electrode active material layer arranged on at least one surface of the negative electrode current collector, and the negative electrode active material layer includes the negative electrode active materials. As an optional example, the negative electrode current collector has two surfaces which are deviated from each other in the thickness direction, and the negative electrode active material layer is arranged on any one or both of the two surfaces, which are deviated from each other, of the negative electrode current collector. In some embodiments, electrode current collector can be a metal foil or a composite current collector. For example, if it is the metal foil, a copper foil can be adopted. In the negative electrode current collector, the composite current collector can include a high molecular substrate layer and a metal layer formed on at least one surface of the high molecular substrate layer. In the negative electrode current collector, the composite current collector can be obtained by forming a metal material on the high polymer material substrate. In the negative electrode current collector, the optional example of the metal material can include at least one of copper, a copper alloy, nickel, a nickel alloy, titanium, a titanium alloy, silver, a silver alloy and the like. In the negative electrode current collector, the optional example of the high molecular substrate can include one or more of polypropylene (PP), polyethylene terephthalate (PET), polybutylene terephthalate (PBT), polystyrene (PS), polyethylene (PE) and the like.

In some embodiments, the negative electrode active material layer may optionally include a negative electrode conductive agent. Optionally, the negative electrode conductive agent can include one or more of superconducting carbon, acetylene black, carbon black, Ketjen black, carbon dots, carbon nanotubes, graphene, and carbon nanofibers. In the negative electrode active material layer, the weight percentage of the negative electrode conductive agent can be 0-15wt%, optionally 0-10wt%, and further optionally 0-5wt%.

In some embodiments, the negative electrode active material layer may optionally include a binder (referred to as a negative electrode binder). As an optional example, the negative electrode binder can include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). Optionally, the weight percentage of the negative electrode binder in the negative electrode active material layer can be 0-10wt%, further 0-5wt%, even further 1-5wt%, and even further optionally 1-3wt%.

In some embodiments, the negative electrode active material layer may optionally include other additives, such as thickeners (like carboxymethyl cellulose sodium (CMC-Na)). The weight percentage of other additives in the negative electrode active material layer can be 0-15wt%, further optionally 0-10wt%, still further optionally 0-5wt%, still further optionally 0-3wt%, and still further optionally 0-2wt%.

In some embodiments, the negative electrode plate or negative electrode film sheet can be prepared by the following steps: dispersing each component for preparing the negative electrode plate or negative electrode film sheet, such as the negative electrode active particles, the negative conductive agent, the binder (the negative electrode binder) and any other component, into a solvent (the optional example of the solvent is N-methyl pyrrolidone (NMP) for example) to form negative electrode slurry. Further, the negative electrode slurry is coated on at least one side surface of the negative electrode current collector, and subjected to the processes of drying, cold pressing and the like to obtain the negative electrode plate or negative electrode film sheet. The cold pressing can be performed by a cold rolling mill. The surface of the negative electrode current collector coated with the negative electrode slurry can be a single surface of the positive electrode current collector or both surfaces of the negative electrode current collector. The solid content of the negative electrode slurry can be 30-70wt%, and optionally, 40-60wt%. The viscosity of the negative electrode slurry at a room temperature can be adjusted to 2,000-10,000 mPa•s, and optionally, 3,000-10,000 mPa•s. The coating unit area density (except the solvent) based on dry weight can be 75 g/m²-220 g/m² during coating of the negative electrode slurry. The compaction density of the negative electrode plate or negative electrode film sheet can be 1.0 g/cm³-2.0 g/cm³, and optionally, 1.0 g/cm³-1.8 g/cm³.

Optionally, the positive electrode plate, the solid electrolyte film sheet, and the negative electrode plate can be stacked sequentially, and the solid electrolyte film sheet is placed between the positive and negative electrode plates, and subjected to hot-rolling to be prepared into the solid-state cell.

Optionally, the positive electrode film sheet, the solid electrolyte film sheet, and the negative electrode plate can be stacked sequentially, and the solid electrolyte film sheet is placed between the positive and negative electrode film sheets, and subjected to hot-rolling to be prepared into the solid-state cell.

In some embodiments, the solid-state battery cell 5 includes the solid-state cell 52.

In some embodiments, the solid-state cell is an all-solid-state cell.

In some embodiments, the solid-state cell 52 (which can be the all-solid-state cell) includes the positive electrode layer 200, the solid electrolyte layer 100, and the negative electrode layer 300 which are stacked in sequence, in which, one example can refer to FIG. 10. Unless otherwise specified, the positive electrode layer 200 includes the positive electrode film 20.

In some embodiments, the solid-state cell 52 includes the positive electrode layer 200, the solid electrolyte layer 100, and the negative electrode layer 300 which are stacked in sequence, in which, the positive electrode layer 200 includes the positive electrode film 20, the positive electrode film 20 includes the positive electrode current collector 210 and the positive electrode active material layers 220 located on both sides of the positive electrode current collector, and the positive electrode active material layers 220 are arranged between the positive electrode current collector 210 and the solid electrolyte layer 100. One example can refer to FIG. 11.

In some embodiments, the solid-state battery can include an outer package. The outer package can be used for packaging the solid-state cell.

In some embodiments, the outer package of the solid-state battery can be a hard case, such as a hard plastic case, an aluminum case, and a steel case. The outer package of the solid-state battery can also be a soft package, such as a soft package. The material of the soft package can be plastic, and further, the optional example of the plastic can include one or more of polypropylene, polybutylene terephthalate, and poly(butylene succinate).

The solid-state battery cell is not particularly limited in shape in the present application, and can be in a cylindrical shape, quadrate shape or other any shapes. For example, FIG. 12 shows the solid-state battery cell 5 of a square structure as an example.

In some embodiments, with reference to FIG. 13, the outer package can include the case 51 and a cover plate 53. The case 51 can include a bottom plate and a side plate connected to the bottom plate, and the bottom plate and the side plate enclose to form an accommodating cavity. The case 51 is provided with an opening in communication with the accommodating cavity, and the cover plate 53 can cover the opening to close the accommodating cavity. The solid-state cells 52 are packaged in the accommodating chamber. There can be one or more solid-state cells 52 in the solid-state battery cell 5, and those skilled in the art can select the number according to actual requirements.

The solid-state battery can be a battery module 4 or a battery pack 1.

The battery module includes at least one solid-state battery cell. There can be one or more solid-state battery cells in the battery module, and those skilled in the art can select the proper number according to the application and the capacity of the battery module.

FIG. 14 shows the battery module 4 as an example. With reference to FIG. 14, in the battery module 4, a plurality of solid-state battery cells 5 can be sequentially arranged along the length direction of the battery module 4. Definitely, the plurality of solid-state battery cells 5 can also be arranged according to any other mode. Further, the plurality of solid-state battery cells 5 can be further fixed through fasteners.

Optionally, the battery module 4 can also include a shell with an accommodating space; and the plurality of solid-state battery cells 5 are accommodated in the accommodating space.

In some embodiments, the battery modules can also be assembled into the battery pack; and there can be one or more battery modules in the battery pack, and those skilled in the art can select appropriate proper number according to the application and the capacity of the battery pack.

In FIG. 15 and FIG. 16, a battery pack 1 is taken as an example. With reference to FIG. 15 and FIG. 16, the battery pack 1 can include a battery box and a plurality of battery modules 4 arranged in the battery box. The battery box includes an upper box body 2 and a lower box body 3, and the upper box body 2 can cover the lower box body 3 and form a closed space for accommodating the battery modules 4. The plurality of battery modules 4 can be arranged in the battery box in any mode.

In some embodiments, the electrical apparatus includes the solid-state battery in any of the embodiments provided by the present application.

Optionally, the solid-state battery can be used as a power supply for the electrical apparatus, or as an energy storage unit for the electrical apparatuses. The electrical apparatuses can include mobile devices, electric vehicles, electric trains, ships, satellites, and energy storage systems, but are not limited thereto. The mobile devices can, for example, be smartphones, and laptops; the electric vehicles can, for example, be pure electric vehicles, hybrid electric vehicles, plug-in hybrid electric vehicles, electric bicycles, electric scooters, electric golf carts, electric trucks, electric motorcycles, and electric tools, but are not limited thereto. The electrical apparatuses can also be applied in military equipment, aerospace, and other fields, and can also be used in energy storage power systems for hydroelectric, thermal, wind, and solar power stations.

As the electrical apparatus, the solid-state battery can be selected based on the use needs.

FIG. 17 shows an electrical apparatus 6 as an example. This electrical apparatus can be the pure electric vehicle, the hybrid electric vehicle, or the plug-in hybrid electric vehicle. To meet the high power and high energy density requirements of this electrical apparatus for the solid-state batteries, the battery pack or battery module can be used.

The apparatus serving as another example can be the mobile phone, tablet, laptop, etc. Such apparatuses typically require a slim design and can use the solid-state batteries as the power supply.

Some embodiments of the present application are described below. The embodiments described below are exemplary and are provided only to explain the present application, and should not be construed as limiting the present application. For techniques or conditions not specified in the embodiments, they are implemented as described above, or according to techniques or conditions described in the literature in the field, or according to product instructions. Reagents or instruments used without a specified manufacturer are conventional products that can be obtained commercially, or can be synthesized in a conventional manner from commercially available products. For example, the Se/Te compounds involved are prepared using the following method: weighing Se powder and Te powder according to a stoichiometric ratio, sealing in a quartz tube under vacuum with the vacuum degree of about 10⁻⁵ Torr, then heating at 900°C to obtain an uniformly-mixed melt, and quenching the melt in ice water to obtain the Se/Te compound (selenium-tellurium alloy).

Unless otherwise specified, in the following examples and contrast examples, raw materials with the same chemical formula come from the same synthesis batch or the same product number, or are prepared according to the same stoichiometric ratio and by the same method.

In the following examples, room temperature refers to 20-30°C.

### Test of Dᵥ50:

In the following examples and contrast examples, the Dᵥ50 of the positive electrode active substances, the sulfide solid electrolytes, and the non-carbon conductive substances can be tested and confirmed using the following method: equipment model: MasterSizer 2000 laser particle size analyzer, reference standard procedure: GB/T19077-2016/ISO 13320:2009; testing procedure: an appropriate amount of the sample to be tested (under sample concentration of 8-12%(w/v)) was collected, 20 mL of solvent (such as xylene or deionized water) was added, and subjected to infraredexcess for 5 min (53 KHz/120 W) to ensure complete dispersion of the sample; and then, the sample was measured according to the GB/T19077-2016/ISO 13320:2009 standard.

The transmission electron microscope (TEM) has the model of FEI/Talos, F200X, with a testing acceleration voltage of 200 kV. This instrument integrates high-resolution scanning/transmission electron microscopy (STEM) and TEM imaging capabilities, as well as energy-dispersive X-ray spectroscopy (EDS) signal detection and three-dimensional chemical characterization based on component mapping.

In the following examples, NCM811 is a high-nickel type lithium transition metal oxide, LiCoO₂ is a lithium-cobalt-oxide type lithium transition metal oxide, and Li_{1.2}Mn_{0.48}Ni_{0.16}Co_{0.16}O₂ is a lithium-rich manganese-based lithium transition metal oxide.

Unless otherwise specified, in the following examples and contrast examples, the steps involving the sulfide-based electrolyte materials are carried out in an argon atmosphere.

It is to be noted that in the following implementation modes and examples, the sulfide all-solid-state batteries are used as optional examples of the solid-state batteries.

Unless otherwise specified, in the following examples, the counting method for "approximate number" in micrometers (µm) or nanometers (nm) is as follows: for number precise to one decimal place, the fluctuation range is within ±0.02; for number between 1 and 9 precise to the nearest whole number, the fluctuation range is within ±0.2; for number between 10 and 99 precise to the nearest whole number, the fluctuation range is within ±2.

### Example 1. Preparation of positive electrode active coated particles (double-layer coated LiNi_{0.8}Co_{0.1}Mn_{0.1}O₂ (NCM811) positive electrode active material)

In this example, NCM811 referred to positive electrode active bodies, first coating sub-layers were a non-carbon conductive substances accounting for 100wt%, second coating sub-layers were electrolyte solids accounting for 100wt%, non-carbon conductive substances were elemental Te, and electrolyte solids were sulfide electrolytes Li_{5.5}PS_{4.5}Cl_{1.5} (LPSCl).

A LiNi_{0.8}Co_{0.1}Mn_{0.1}O₂ positive electrode (Dᵥ50 of about 4 µm) and elemental Se powder (Dᵥ50 of about 30 µm) were weighed according to weight ratio and uniformly mixed by a dry coating device, with the coating amount of 1wt%; and the obtained uniformly mixed materials were subjected to thermal treatment in an argon atmosphere at 300°C for 1 h to obtain a 1wt% Secoated NCM811 positive electrode material (recorded as NCM811@Se).

The Li_{5.5}PS_{4.5}Cl_{1.5} (LPSCl) sulfide electrolytes (Dᵥ50 of 1 µm) was weighed according to the coating amount and added to an anhydrous acetonitrile solution, uniform stirring was carried out, then the NCM811@Se positive electrode material was added, the coating amount of the LPSCl electrolytes was 2wt%, stirring was continuously carried out for 3 h, and the obtained solution was dried under vacuum at 150°C for 5 h to obtain a double-layer coated NCM811@Se@LPSCl positive electrode material.

According to the results of observation from the transmission electron microscope, with reference to FIG. 18, the positive electrode active coated particles of a double-layer coated structure was prepared, in which, the thickness of the Se coating layers (the first coating sub-layers) was about 2 nm, the thickness of the LPSCl electrolyte coating layers (the second coating sub-layers) was about 4 nm, and the total thickness of the coating layers was about 6 nm. Further, the element composition of each coating layer could be confirmed according to EDS energy spectrum scanning result, with the result shown in FIG. 19. According to the EDS analysis results, the prepared positive electrode active particles have double-layer coated materials (positive electrode active coated particles), with the inner layers (first coating sub-layers) being Se and the outer layers (second coating sub-layers) being LPSCl electrolytes, which were consistent with the design.

### (2) Preparation of positive electrode film sheets of solid-state battery (positive electrode plates of all-solid-state battery)

Double-layer-coated NCM811 positive electrode materials, LPSCl sulfide electrolytes (Dᵥ50 of 1 µm), VGCF, and a binder polytetrafluoroethylene (PTFE) were weighed according to a weight proportion of 85:13:1:1, and mixed evenly in a double planetary mixer; then the uniformly mixed powder was heated and kneaded into the lump material under pressure in a kneader; the lump material was hot-rolled at 80°C to form a self-supporting positive electrode plate; and the self-supporting positive electrode plate was finally composited with an Al foil of the current collector by hot rollers to obtain the positive electrode film sheet.

### (3) Assembly of solid-state batteries (sulfide all-solid-state batteries)

100 mg of sulfide electrolyte LPSCl was weighed and added to the battery mold to be pressurized into the solid electrolyte interphase sheet; then, the positive electrode film sheet was placed on one side of the solid electrolyte interphase sheet, and the InLi alloy was arranged on the other side as the negative electrode layer to be assembled into the all-solid-state battery. The battery test window was 2.8-4.3V vs Li.

### Examples 2-6: Composition of non-carbon conductive substances in the first coating sub-layers was changed.

Solid-state batteries were prepared using a method basically the same as in the Example 1, with the difference in the composition of the first conductive substances in the first coating sub-layers.

In the Example 2, the elemental Te was used instead of the elemental Se as in the Example 1.

In the Example 3, a Se_{0.4}Te_{0.6} compound was used instead of the elemental Se as in the Example 1.

In the Example 4, a Se_{0.6}Te_{0.4} compound was used instead of the elemental Se as in the Example 1.

In the Example 5, a mixture of the elemental Se and Te in a weight ratio of 1:1 was used instead of the elemental Se in the Example 1.

In the Example 6, a mixture of the elemental Se and Te in a weight ratio of 3:7 was used instead of the elemental Se in the Example 1.

**Examples 7-10:** Solid-state batteries were prepared using a method substantially the same as in the Example 1, with the difference in that the coating amount of the non-carbon conductive substances in the first coating sub-layers was changed, and at least one parameter of the weight proportion of the first coating sub-layers in the positive electrode active coated particles and the thickness of the first coating sub-layers was changed.

**Examples 11-16:** Solid-state batteries were prepared using a method substantially the same as in the Example 1, with the difference in that the composition of the second coating sub-layers was changed, in which, at least one parameter of the chemical composition and Dᵥ50 of raw materials of the electrolyte solids in the second coating sub-layers, the weight proportion of the second coating sub-layers in the positive electrode active coated particles, and the thickness of the second coating sub-layers was different.

The electrolyte solids in the Example 11 were LGPS-type sulfide electrolytes Li₁₀GeP₂S₁₂; the electrolytes solid in the Example 12 were 75Li₂S-25P₂S₅, namely, lithium sulfide phosphorus pentasulfide compound type sulfide electrolytes (75Li₂S)·(25P₂S₅), with reference to Table 2. **Examples 17-21:** Solid-state batteries were prepared using a method substantially the same as in the Example 1, with the difference in the positive electrode active bodies, in which, at least one parameter of the chemical composition of the positive electrode active substances in the positive electrode active bodies and Dᵥ50 of the raw materials was different.

**Examples 22-26:** Solid-state batteries are prepared using a method substantially the same as in the Example 1, with the difference in the composition of the positive electrode active material layer, in which, at least one parameter of the chemical composition of the electrolyte solids in the positive electrode electrolyte particles and Dᵥ50 of raw materials, the weight percentage of the positive electrode electrolyte particles in the positive electrode active material layers, the weight proportion of the positive electrode active coated particles in the positive electrode active material layer, and the mass ratio of the positive electrode electrolyte particles relative to the positive electrode active coated particles was different.

**Example 27:** A solid-state battery was prepared using a method substantially the same as in the Example 1, with the difference in that the second coating sub-layers did not contain the sulfide electrolytes.

**Example 28:** A solid-state battery is prepared using a method substantially the same as in the Example 1, with the difference in that the positive electrode electrolyte layers did not contain thee sulfide electrolytes.

### Contrast Example 1: The positive electrode active particles did not have the coating layers and oxygen storage layers.

A solid-state battery was prepared using a method basically the same as in the Example 1, with the difference in that the positive electrode active particles were different, uncoated NCM811 was used instead of the double-layer coated NCM811@Se@LPSCl positive electrode materials in the Example 1.

### Contrast Example 2: Only the first coating sub-layers (Se layers) were arranged.

A solid-state battery was prepared using a method basically the same as in the Example 1, with the difference in that the second coating sub-layers were omitted.

### Contrast Example 3: Only the second coating sub-layers (LPSCl layers) were arranged.

A solid-state battery was prepared using a method basically the same as in the Example 1, with the difference in that the first coating sub-layers were omitted.

**Contrast Example 4:** A solid-state battery was prepared using a method basically the same as that in the Example 1, with the difference in that the non-carbon conductive substances were replaced with carbon conductive substances.

The relevant parameters of the Examples 1-28 and Contrast Examples 1-4 are shown in Tables 1-4.

**Table 1. Relevant parameters of first coating sub-layer of positive electrode active coated particles**

| No. | **First coating sub-layer (non-carbon conductive substance, first conductive substance)** | | | |
|---|---|---|---|---|
| | Type of non-carbon conductive substance | Weight percentage of Te in first conductive substance | Weight proportion of first coating sub-layers in positive electrode active coated particles | Thickness of first coating sub-layer |
| Example 1 | Elemental Se | 0 | 1% | About 2nm |
| Example 2 | Elemental Te | 100% | 1% | About 2nm |
| Example 3 | Se/Te compound, Se_{0.4}Te_{0.6} | 71% | 1% | About 2nm |
| Example 4 | Se/Te compound, Se_{0.6}Te_{0.4} | 52% | 1% | About 2nm |
| Example 5 | Elemental Se + Te, weight ratio of 1:1 | 50% | 1% | About 2nm |
| Example 6 | Elemental Se + Te, weight ratio of 3:7 | 70% | 1% | About 2nm |
| Example 7 | Elemental Se | 0 | 0.1% | 0.2nm |
| Example 8 | Elemental Se | 0 | 0.5% | 1nm |
| Example 9 | Elemental Se | 0 | 5% | About 10nm |
| Example 10 | Elemental Se | 0 | 10% | About 20nm |
| Example 11 | Elemental Se | 0 | 1% | About 2nm |
| Example 12 | Elemental Se | 0 | 1% | About 2nm |
| Example 13 | Elemental Se | 0 | 1% | About 2nm |
| Example 14 | Elemental Se | 0 | 1% | About 2nm |
| Example 15 | Elemental Se | 0 | 1% | About 2nm |
| Example 16 | Elemental Se | 0 | 1% | About 2nm |
| Example 17 | Elemental Se | 0 | 1% | About 2nm |
| Example 18 | Elemental Se | 0 | 1% | About 2nm |
| Example 19 | Elemental Se | 0 | 1% | About 2nm |
| Example 20 | Elemental Se | 0 | 1% | About 2nm |
| Example 21 | Elemental Se | 0 | 1% | About 2nm |
| Example 22 | Elemental Se | 0 | 1% | About 2nm |
| Example 23 | Elemental Se | 0 | 1% | About 2nm |
| Example 24 | Elemental Se | 0 | 1% | About 2nm |
| Example 25 | Elemental Se | 0 | 1% | About 2nm |
| Example 26 | Elemental Se | 0 | 1% | About 2nm |
| Example 27 | Elemental Se | 0 | 1% | About 2nm |
| Example 28 | Elemental Se | 0 | 1% | About 2nm |
| Contrast Example 1 | / | / | / | / |
| Contrast Example 2 | Elemental Se | 0 | 1% | About 2nm |
| Contrast Example 3 | / | / | / | / |
| Contrast Example 4 | Replaced with VGCF | / | / | About 2nm |

**Table 2. Relevant parameters of second coating sub-layers of positive electrode active coated particles**

| No. | Second coating sub-layer (electrolyte solid) | | | | | |
|---|---|---|---|---|---|---|
| | Whether sulfide electrolyte s are in the second coating sub-layer | Type of electrolyte solid | Chemical formula of electrolyte solid | Dᵥ50 of raw materials | Weight proportion of second coating sub-layer in positive electrode active coated particles | Thickness of second coating sub-layer |
| Example 1 | Yes | Argyrodite | Li_{5.5}PS_{4.5}Cl_{1.5} | 1µm | 2% | About 4nm |
| Example 2 | Yes | Argyrodite | The same as Example 1 | 1µm | 2% | About 4nm |
| Example 3 | Yes | Argyrodite | The same as Example 1 | 1µm | 2% | About 4nm |
| Example 4 | Yes | Argyrodite | The same as Example 1 | 1µm | 2% | About 4nm |
| Example 5 | Yes | Argyrodite | The same as Example 1 | 1µm | 2% | About 4nm |
| Example 6 | Yes | Argyrodite | The same as Example 1 | 1µm | 2% | About 4nm |
| Example 7 | Yes | Argyrodite | The same as Example 1 | 1µm | 2% | About 4nm |
| Example 8 | Yes | Argyrodite | The same as Example 1 | 1µm | 2% | About 4nm |
| Example 9 | Yes | Argyrodite | The same as Example 1 | 1µm | 2% | About 4nm |
| Example 10 | Yes | Argyrodite | The same as Example 1 | 1µm | 2% | About 4nm |
| Example 11 | Yes | LGPS type | Li₁₀GeP₂S₁₂ | 1µm | 0.5% | About 1nm |
| Example 12 | Yes | Lithium sulfide phosphorus pentasulfid e compound type sulfide electrolyte | 75Li₂S-25P₂S₅ | 1µm | 5% | About 10nm |
| Example 13 | Yes | Argyrodite | The same as Example 1 | 1µm | 0.1% | 0.2nm |
| Example 14 | Yes | Argyrodite | The same as Example 1 | About 50nm | 10% | About 20nm |
| Example 15 | Yes | Argyrodite | The same as Example 1 | About 5µm | 2% | About 4nm |
| Example 16 | Yes | Argyrodite | The same as Example 1 | About 20µm | 2% | About 3nm |
| Example 17 | Yes | Argyrodite | The same as Example 1 | 1µm | 2% | About 4nm |
| Example 18 | Yes | Argyrodite | The same as Example 1 | 1µm | 2% | About 4nm |
| Example 19 | Yes | Argyrodite | The same as Example 1 | 1µm | 2% | About 4nm |
| Example 20 | Yes | Argyrodite | The same as Example 1 | 1µm | 2% | About 4nm |
| Example 21 | Yes | Argyrodite | The same as Example 1 | 1µm | 2% | About 4nm |
| Example 22 | Yes | Argyrodite | The same as Example 1 | 1µm | 2% | About 4nm |
| Example 23 | Yes | Argyrodite | The same as Example 1 | 1µm | 2% | About 4nm |
| Example 24 | Yes | Argyrodite | The same as Example 1 | 1µm | 2% | About 4nm |
| Example 25 | Yes | Argyrodite | The same as Example 1 | 1µm | 2% | About 4nm |
| Example 26 | Yes | Argyrodite | The same as Example 1 | 1µm | 2% | About 4nm |
| Example 27 | No | Halide electrolyte | Li₃InCl₆ | 1µm | 2% | About 4nm |
| Example 28 | Yes | Argyrodite | The same as Example 1 | 1µm | 2% | About 4nm |
| Contrast Example 1 | / | / | / | / | / | / |
| Comparativ e Example 2 | / | / | / | / | / | / |
| Contrast Example 3 | Yes | Argyrodite | The same as Example 1 | 1µm | 2% | About 4nm |
| Contrast Example 4 | Yes | Argyrodite | The same as Example 1 | 1µm | 2% | About 4nm |

**Table 3. Relevant parameters of positive electrode electrolyte particles**

| No. | Positive electrode electrolyte particle (electrolyte solids) | | | | |
|---|---|---|---|---|---|
| | Whether sulfide electrolytes are in the positive electrode electrolyte particles | Type of electrolyte solid | Chemical formula of electrolyte solid | Dv50 of raw material | Weight percentage of positive electrode electrolyte particles in positive electrode active material layer |
| Example 1 | Yes | Argyrodite | Li_{5.5}PS_{4.5}Cl_{1.5} | 1µm | 13% |
| Example 2 | Yes | Argyrodite | The same as Example 1 | 1µm | 13% |
| Example 3 | Yes | Argyrodite | The same as Example 1 | 1µm | 13% |
| Example 4 | Yes | Argyrodite | The same as Example 1 | 1µm | 13% |
| Example 5 | Yes | Argyrodite | The same as Example 1 | 1µm | 13% |
| Example 6 | Yes | Argyrodite | The same as Example 1 | 1µm | 13% |
| Example 7 | Yes | Argyrodite | The same as Example 1 | 1µm | 13% |
| Example 8 | Yes | Argyrodite | The same as Example 1 | 1µm | 13% |
| Example 9 | Yes | Argyrodite | The same as Example 1 | 1µm | 13% |
| Example 10 | Yes | Argyrodite | The same as Example 1 | 1µm | 13% |
| Example 11 | Yes | Argyrodite | The same as Example 1 | 1µm | 13% |
| Example 12 | Yes | Argyrodite | The same as Example 1 | 1µm | 13% |
| Example 13 | Yes | Argyrodite | The same as Example 1 | 1µm | 13% |
| Example 14 | Yes | Argyrodite | The same as Example 1 | 1µm | 13% |
| Example 15 | Yes | Argyrodite | The same as Example 1 | 1µm | 13% |
| Example 16 | Yes | Argyrodite | The same as Example 1 | 1µm | 13% |
| Example 17 | Yes | Argyrodite | The same as Example 1 | 1µm | 13% |
| Example 18 | Yes | Argyrodite | The same as Example 1 | 1µm | 13% |
| Example 19 | Yes | Argyrodite | The same as Example 1 | 1µm | 13% |
| Example 20 | Yes | Argyrodite | The same as Example 1 | 1µm | 13% |
| Example 21 | Yes | Argyrodite | The same as Example 1 | 1µm | 13% |
| Example 22 | Yes | Argyrodite | The same as Example 1 | About 50nm | 13% |
| Example 23 | Yes | LGPS type | Li₁₀GeP₂S₁₂ | About 2µm | 28% |
| Example 24 | Yes | Argyrodite | The same as Example 1 | About 5µm | 19% |
| Example 25 | Yes | Argyrodite | The same as Example 1 | About 10µm | 2% |
| Example 26 | Yes | Argyrodite | The same as Example 1 | About 20µm | 13% |
| Example 27 | Yes | Argyrodite | The same as Example 1 | 1µm | 13% |
| Example 28 | No | Halide electrolyte | Li₃InCl₆ | 1µm | 13% |
| Contrast Example 1 | Yes | Argyrodite | The same as Example 1 | 1µm | 13% |
| Contrast Example 2 | Yes | Argyrodite | Li₆PS₅Cl | 1µm | 13% |
| Contrast Example 3 | Yes | Argyrodite | Li₆PS₅Cl | 1µm | 13% |
| Contrast Example 4 | Yes | Argyrodite | Li₆PS₅Cl | 1µm | 13% |

**Table 4. Some parameters of positive electrode active bodies and positive electrode active material layers**

| No. | Positive electrode active body | | | Positive electrode active material layer | |
|---|---|---|---|---|---|
| | Type of oxide positive electrode active substances (lithium transition metal oxide) | Chemical formula of oxide positive electrode active substance | Dᵥ50 of raw materials | Weight proportion of positive electrode active coated particles in positive electrode active material layer | Mass ratio of positive electrode electrolyte particles in positive electrode active coated particles |
| Example 1 | High-nickel type | NCM811 | 4µm | 85% | 15.3% |
| Example 2 | High-nickel type | The same as Example 1 | The same as Example 1 | 85% | The same as Example 1 |
| Example 3 | High-nickel type | The same as Example 1 | The same as Example 1 | 85% | The same as Example 1 |
| Example 4 | High-nickel type | The same as Example 1 | The same as Example 1 | 85% | The same as Example 1 |
| Example 5 | High-nickel type | The same as Example 1 | The same as Example 1 | 85% | The same as Example 1 |
| Example 6 | High-nickel type | The same as Example 1 | The same as Example 1 | 85% | The same as Example 1 |
| Example 7 | High-nickel type | The same as Example 1 | The same as Example 1 | 85% | The same as Example 1 |
| Example 8 | High-nickel type | The same as Example 1 | The same as Example 1 | 85% | The same as Example 1 |
| Example 9 | High-nickel type | The same as Example 1 | The same as Example 1 | 85% | The same as Example 1 |
| Example 10 | High-nickel type | The same as Example 1 | The same as Example 1 | 85% | The same as Example 1 |
| Example 11 | High-nickel type | The same as Example 1 | The same as Example 1 | 85% | The same as Example 1 |
| Example 12 | High-nickel type | The same as Example 1 | The same as Example 1 | 85% | The same as Example 1 |
| Example 13 | High-nickel type | The same as Example 1 | The same as Example 1 | 85% | The same as Example 1 |
| Example 14 | High-nickel type | The same as Example 1 | The same as Example 1 | 85% | The same as Example 1 |
| Example 15 | High-nickel type | The same as Example 1 | The same as Example 1 | 85% | The same as Example 1 |
| Example 16 | High-nickel type | The same as Example 1 | The same as Example 1 | 85% | The same as Example 1 |
| Example 17 | Lithium cobalt oxide | LiCoO₂ | The same as Example 1 | 85% | The same as Example 1 |
| Example 18 | Lithium-rich manganese-based | Li_{1.2}Mn_{0.48}Ni _{0.16}Co_{0.16}O₂ | About 0.1µm | 85% | The same as Example 1 |
| Example 19 | High-nickel type | The same as Example 1 | About 1µm | 85% | The same as Example 1 |
| Example 20 | High-nickel type | The same as Example 1 | About 10µm | 85% | The same as Example 1 |
| Example 21 | High-nickel type | The same as Example 1 | About 20µm | 85% | The same as Example 1 |
| Example 22 | High-nickel type | The same as Example 1 | The same as Example 1 | 85% | The same as Example 1 |
| Example 23 | High-nickel type | The same as Example 1 | The same as Example 1 | 70% | 40.0% |
| Example 24 | High-nickel type | The same as Example 1 | The same as Example 1 | 79% | 24.1% |
| Example 25 | High-nickel type | The same as Example 1 | The same as Example 1 | 95% | 2.1% |
| Example 26 | High-nickel type | The same as Example 1 | The same as Example 1 | 85% | The same as Example 1 |
| Example 27 | High-nickel type | The same as Example 1 | The same as Example 1 | 85% | The same as Example 1 |
| Example 28 | High-nickel type | The same as Example 1 | The same as Example 1 | 85% | The same as Example 1 |
| Contrast Example 1 | High-nickel type | The same as Example 1 | The same as Example 1 | 85% | The same as Example 1 |
| Contrast Example 2 | High-nickel type | The same as Example 1 | The same as Example 1 | 85% | The same as Example 1 |
| Contrast Example 3 | High-nickel type | The same as Example 1 | The same as Example 1 | 85% | The same as Example 1 |
| Contrast Example 4 | High-nickel type | The same as Example 1 | The same as Example 1 | 85% | The same as Example 1 |

### Performance test and analysis:

The electrochemical performances of the positive electrode plate and the corresponding all-solid-state battery were tested by solid-state mold batteries, and the battery test window was 2.8-4.3V (potential relative to lithium).

### 1. Initial discharge capacity

Test procedure: the assembled all-solid-state battery was charged at a current density of 0.1C to 3.68 V (potential of 4.3 V relative to lithium), stood for 10 min, and then discharged at a current density of 0.1C to 2.18 V (potential of 2.8 V relative to lithium) to obtain the initial discharge capacity of the battery. The battery was tested at 25±3°C, with 1C=200 mA/g.

### 2. Initial Coulombic efficiency

The initial discharge capacity tested at 0.1C was divided by the initial charge capacity to obtain the initial Coulombic efficiency of the battery.

### 3. Rate performance

Test procedure: the charge rate of the all-solid-state battery was fixed at 0.1 C, and then the all-solid-state battery was discharged at rates of 0.1 C, 0.33 C, 1 C, 2 C, and 3 C, with 3 cycles at each rate; the battery voltage test window was 2.8-4.3 V vs. Li⁺/Li, and the battery was tested at 25±3°C, in which, 1C=200 mA/g.

### 4. Cycle performance:

The testing procedure is as follows: the assembled all-solid-state battery was charged and discharged at 0.1 C for activation with 3 cycles, and then charged and discharged at 0.33 C for long-cycle test with 200 cycles to calculate the cycle capacity retention of the battery. The battery voltage test window was 2.8-4.3 V vs. Li⁺/Li (potential for lithium, active ion being Li⁺), and the battery was tested at 25±3°C, with 1C=200 mA/g. The test results are show as "Capacity retention after 200 cycles, 0.33C" in Table 4.

### Test analysis results:

The test results are shown in Table 5.

The sulfide solid-state batteries prepared in the Examples 1-28 all employed the positive electrode active layer composition provided by the present application, including the positive electrode active coated particles and the positive electrode electrolyte particles, in which, the positive electrode active coated particles included the first coating sub-layers containing the non-carbon conductive substances and the second coating sub-layers containing the electrolyte solids; and at least one of the first coating sub-layers and the positive electrode electrolyte particles included the sulfide solid electrolytes. The sulfide solid-state batteries prepared in the Examples 1-28 all showed good discharge capacity, rate performance and cycle performance, as well as good initial Coulombic efficiency.

In the Examples 3-6, the first coating sub-layers included both the Se and Te elements; due to the synergistic effect between Se and Te, the Se element was more easily combined with peroxide ions to form SeO₃²⁻, thus facilitating inhibition to the decomposition of the sulfide electrolytes; with the Te element, the non-carbon conductive substances showed higher electronic conductivity, thus providing a more sufficient electronic conduction pathway; and at the moment, if the non-carbon conductive substances were the SeₓTe₁₋ₓ compound or Se and Te were mixed and added, the solid-state batteries showed good electrochemical performance. Furthermore, the Se and Te in the SeₓTe₁₋ₓ compound were combined on an atomic scale, making the use effect excellent.

For the positive electrode active particles in the Example 1, the positive electrode active substances without any coating layers were used instead of the positive electrode active coated particles with double coating layers in the Examples 1-16, the discharge capacity, rate performance and cycle performance in the Example 1 remarkably degraded, and furthermore, the initial Coulombic efficiency was obviously reduced. Obviously, after the first coating sub-layers and the second coating sub-layers were introduced at the same time, the interface side reactions between the positive electrode active substances and the positive electrode electrolyte particles could be inhibited while the interface electronic conductivity and the ionic conductivity were improved. Therefore, compared with the Contrast Example 1, in the Examples 1-16, the discharge capacity, initial Coulombic efficiency, rate performance and cycle performance were remarkably improved.

The positive electrode active particles in the Contrast Example 2 were only provided with the first coating sub-layers; and compared with the Examples 1-6 and 11-16, in the Contrast Example 2, the discharge capacity, rate performance and cycle performance degraded to different extents, and moreover, the initial Coulombic efficiency was also reduced.

In addition, by comparing the Contrast Example 1 with the Contrast Example 2, the first coating sub-layers could inhibit the interface side reactions, thereby improving the structural stability of the positive electrode materials, and further improving the electrochemical performance of the battery.

The positive electrode active particles in the Contrast Example 3 were only provided with the second coating sub-layers; and compared with the Examples 1-10, in the Contrast Example 3, the discharge capacity, rate performance and cycle performance degraded seriously, and moreover, the initial Coulombic efficiency was obviously reduced. In the Contrast Example 3, the first coating sub-layers were omitted, the surfaces of the positive electrode active substances (NCM811) were directly coated with the sulfide electrolytes (LPSCl), and during the thermal treatment process, the positive electrode active substances would be directly subjected to side reactions with the sulfide electrolytes, resulting in damage to the structure of the positive electrode active substances; moreover, an impedance layer with high interface resistance was also generated, causing poor discharge capacity and cycle performance of the battery.

For the positive electrode active particles in the Contrast Example 4, the carbon conductive substances were used instead of the non-carbon conductive substances in the first coating sub-layers in the Examples 1-6; and in the Contrast Example 3, the discharge capacity, rate performance and cycle performance degraded to different extents, and moreover, the initial Coulombic efficiency was obviously reduced.

**Table 5. Electrochemical performance test results**

| No. | Discharge specific capacity under 0.1C (mAh/g) | Initial Coulombic efficiency (%) | Discharge specific capacity under 0.33C (mAh/g) | Discharge specific capacity under 1C (mAh/g) | Discharge specific capacity under 2C (mAh/g) | Discharge specific capacity under 3C (mAh/g) | Capacity retention after 200 cycles (0.33C) (%) |
|---|---|---|---|---|---|---|---|
| Example 1 | 205.6 | 87.4 | 194.2 | 183.5 | 167.7 | 155.3 | 95.8 |
| Example 2 | 207.4 | 87.8 | 196.5 | 185.1 | 170.4 | 157.8 | 96.3 |
| Example 3 | 210.8 | 88.5 | 199.3 | 187.4 | 172.5 | 160.6 | 96.7 |
| Example 4 | 208.5 | 88 | 197.4 | 186.5 | 171.3 | 158.6 | 96.8 |
| Example 5 | 207.8 | 87.9 | 196.9 | 185.4 | 170.7 | 158.1 | 96.5 |
| Example 6 | 208.6 | 88.1 | 197.5 | 186.7 | 171.4 | 158.8 | 96.7 |
| Example 7 | 194.8 | 85.8 | 183.5 | 168.7 | 153.4 | 138.3 | 91.4 |
| Example 8 | 200.3 | 86.9 | 189.4 | 177.6 | 162.1 | 149.7 | 93.5 |
| Example 9 | 202.1 | 87.5 | 191.6 | 180.3 | 164.8 | 152.5 | 92.3 |
| Example 10 | 198.4 | 87.1 | 186.5 | 174.3 | 159.8 | 145.6 | 91.6 |
| Example 11 | 202.7 | 86.5 | 191.8 | 180.6 | 165.2 | 152.7 | 92.4 |
| Example 12 | 196.8 | 86.7 | 184.4 | 172.5 | 157.7 | 143.3 | 91.4 |
| Example 13 | 198.8 | 87 | 186.5 | 164.7 | 145.5 | 130.9 | 91.8 |
| Example 14 | 200.5 | 87.2 | 189.6 | 178.2 | 164.3 | 150.5 | 92.5 |
| Example 15 | 203.2 | 87.4 | 192.3 | 181.4 | 165.6 | 152.4 | 93.4 |
| Example 16 | 198.4 | 86.7 | 186.1 | 163.4 | 144.2 | 127.6 | 92.1 |
| Example 17 | 146.5 | 92.4 | 140.5 | 130.4 | 118.5 | 105.6 | 95.4 |
| Example 18 | 248.7 | 84.3 | 235.5 | 220.4 | 198.6 | 177.8 | 94.7 |
| Example 19 | 210.7 | 87.5 | 199.6 | 188.4 | 173.6 | 160.2 | 96.1 |
| Example 20 | 199.2 | 87.1 | 189.3 | 177.3 | 159.6 | 148.6 | 96.3 |
| Example 21 | 195.6 | 86.8 | 184.1 | 171.4 | 156.5 | 142.6 | 96.6 |
| Example 22 | 211.8 | 88.2 | 200.8 | 189.7 | 174.9 | 161.4 | 96.9 |
| Example 23 | 210.5 | 87.3 | 200.2 | 189.6 | 176.8 | 166.6 | 97.2 |
| Example 24 | 204.5 | 87.2 | 193.1 | 180.3 | 162.3 | 150.2 | 92.2 |
| Example 25 | 160.3 | 67.5 | 129.3 | 90.4 | 57.2 | 25.4 | 60.5 |
| Example 26 | 195.4 | 85.7 | 182.8 | 155.7 | 135.6 | 119.7 | 91.4 |
| Example 27 | 204.8 | 88.3 | 193.4 | 182.5 | 166.3 | 154.7 | 95.5 |
| Example 28 | 202.4 | 88.7 | 191.3 | 180.4 | 163.8 | 151.6 | 94.7 |
| Contrast Example 1 | 179.3 | 77.6 | 161.4 | 138.7 | 116.2 | 86.3 | 66.4 |
| Contrast Example 2 | 194.6 | 85.4 | 181.4 | 154.2 | 132.3 | 110.4 | 90.7 |
| Contrast Example 3 | 150.4 | 65.7 | 124.5 | 87.3 | 54.2 | 23.6 | 54.8 |
| Contrast Example 4 | 181.4 | 74.3 | 163.5 | 139.8 | 117.6 | 87.5 | 67.8 |

The above description of various embodiments tends to emphasize the differences between each embodiment, and their similarities or common features can be cross-referenced. For the sake of brevity, they will not be repeated here. The technical features of the embodiments described above can be combined in any manner. To keep the description concise, not all possible combinations of the technical features in the above embodiments have been described. However, as long as these combinations of technical features do not conflict with each other, they should be considered within the scope described in the present specification. It is to be noted that the present application is not limited to the above embodiments. The above embodiments are merely examples, and any embodiments within the technical solutions of the present application that have the same technical concept and achieve the same functional effects are included within the technical scope of the present application. The embodiments described above only represent a few implementation modes of the embodiments of the present application and are described in detail, but this should not be construed as a limitation on the patent scope. In addition, without departing from the gist of the present application, any modifications that those skilled in the art can conceive of for the embodiments, or other methods constructed by combining part of the elements in the embodiments, are also included within the scope of the present application.

## Claims

1. A positive electrode active layer composition, comprising a positive electrode active coated particle and a positive electrode electrolyte particle, wherein:
the positive electrode active coated particle comprises a positive electrode active body and a coating layer coating at least part of the surfaces of the positive electrode active body; the coating layer comprises a first coating sub-layer and a second coating sub-layer; the second coating sub-layer is located on the surface of the side, far away from the positive electrode active body, of the first coating sub-layer;
the positive electrode active body comprises a positive electrode active substance, and the positive electrode active substance comprises an oxide positive electrode active substance;
the first coating sub-layer comprises a non-carbon conductive substance, the non-carbon conductive substance comprises at least one of elemental Se, elemental Te, and a Se/Te compound, the Se/Te compound has a chemical formula of SeₓTe₁₋ₓ, 0<x<1;
the second coating sub-layer comprises an electrolyte solid; and
at least one of the positive electrode electrolyte particle and the second coating sub-layer comprises a sulfide electrolyte.

2. The positive electrode active layer composition according to claim 1, wherein an electronic conductivity of the non-carbon conductive substance under at least one temperature of 20-100°C or within at least part of temperature range is greater than or equal to that of elemental Se.

3. The positive electrode active layer composition according to claim 1 or 2, wherein a weight percentage of the Te element in the non-carbon conductive substance is 50-100wt%.

4. The positive electrode active layer composition according to claim 1 or 2, wherein a weight percentage of the Te element in the non-carbon conductive substance is 60-100wt%.

5. The positive electrode active layer composition according to any one of claims 1 to 3, wherein at least one of the elemental Se, elemental Te , and the Se/Te compound is recorded as a first conductive substance, and a weight percentage of the first conductive substance in the non-carbon conductive substance is 80-100wt%, optionally 90-100wt%.

6. The positive electrode active layer composition according to any one of claims 1 to 5, wherein the positive electrode active coated particle meets one or more of the following characteristics:
a weight percentage of the first coating sub-layer in the positive electrode active coated particle is 0.1-10wt%;
a weight percentage of the non-carbon conductive substance in the first coating sub-layer is 80-100wt%; and
a thickness of the first coating sub-layer is 0.1-50 nm.

7. The positive electrode active layer composition according to claim 6, wherein the positive electrode active coated particle meets one or more of the following characteristics:
the weight percentage of the first coating sub-layer in the positive electrode active coated particle is 0.5-5wt%;
the weight percentage of the electrolyte solid in the first coating sub-layer is 90-100wt%; and
the thickness of the first coating sub-layer is 0.5-10 nm.

8. The positive electrode active layer composition according to any one of claims 1 to 7, wherein the sulfide electrolyte comprises one or more of an argyrodite type sulfide electrolyte, an LGPS sulfide electrolytes, and a lithium-sulfur phosphorus pentasulfide composite type sulfide electrolyte.

9. The positive electrode active layer composition according to claim 8, wherein the sulfide electrolyte meets one or more of the following characteristics:
the argyrodite type sulfide electrolyte comprises the sulfide electrolyte with the chemical formula of Li_{6±s}P₁₋ⱼAⱼS_{5±s-t}BₜX_{1±s}, in which, 0≤j<1, 0≤t<1, 0≤s<1, A is selected from one or more elements of Ge, Si, Sn, and Sb, B is selected from one or more elements of Te, and X is selected from one or more elements of Cl, Br, I and F;
the LGPS sulfide electrolyte comprises the sulfide electrolyte with the chemical formula of Li_{10±δ5}Ge_{1-g}G_{g}P_{2-q}Q_{q}S_{12-w}W_{w}, in which, 0≤δ5<1, 0≤g≤1, 0≤q≤2, 0≤w<1, G is one or two elements of Si, and Sn, Q is Sb, and W is selected from one or more elements of O, Se, Te, Cl, Br, I, and F; and
the lithium-sulfur phosphorus pentasulfide composite type sulfide electrolyte comprises the sulfide electrolytes with the chemical formula of (100-u-v)Li₂S·uP₂S₅·vMₘNₙ, in which, 0<u<100, 0≤v<100, 0≤u+v<100, 0≤m<4, 0≤n<6, M is selected from one or more elements of Li, B, Ge, Si, Sn, and Sb, and N is selected from one or more elements of S, Se, Te, O, Cl, Br, I, and F.

10. The positive electrode active layer composition according to any one of claims 1 to 9, wherein the positive electrode active coated particle meets one or more of the following characteristics:
a weight percentage of the second coating sub-layer in the positive electrode active coated particle is 0.1-10wt%;
a weight percentage of the electrolyte solid in the second coating sub-layer is 50-100wt%.
an electrolyte solid comprises a sulfide-based electrolyte, and a weight percentage of the sulfide-based electrolyte in the electrolyte solid is 50-100wt%; and
a thickness of the second coating sub-layer is 0.1-50 nm.

11. The positive electrode active layer composition according to claim 10, wherein the positive electrode active coated particle meets one or more of the following characteristics:
the weight percentage of the second coating sub-layer in the positive electrode active coated particle is 0.5-5wt%;
the weight percentage of the electrolyte solid in the second coating sub-layer is 80-100wt%, optionally, 90-100wt%;
the electrolyte solid comprises the sulfide-based electrolyte, and the weight percentage of the sulfide-based electrolyte in the electrolyte solid is 80-100wt%, further optionally, 90-100wt%; and
the thickness of the second coating sub-layer is 0.5-10 nm.

12. The positive electrode active layer composition according to any one of claims 1 to 11, meeting one or more of the following characteristics:
the positive electrode electrolyte particle and the second coating sub-layer both comprises the sulfide electrolyte; and
one of the positive electrode electrolyte particle and the second coating sub-layer comprises the sulfide electrolyte, and the other one is an optional solid electrolyte.

13. The positive electrode active layer composition according to claim 12, wherein one of the positive electrode electrolyte particle and the second coating sub-layer comprises the sulfide electrolyte, and the other one comprises one or more selected from the group consisting of a sulfide electrolyte, a halide electrolyte, an oxide electrolyte, and a polymer electrolyte.

14. The positive electrode active layer composition according to any of claim 13, wherein the second coating sub-layer comprises the sulfide electrolyte.

15. The positive electrode active layer composition according to any of claim 12, meeting one or more of the following characteristics:
the second coating sub-layer comprises the sulfide-based electrolyte, and a weight percentage of the sulfide-based electrolyte in the second coating sub-layer is 80-100wt%, optionally, 90-100wt%; and
the positive electrode electrolyte particle comprises the sulfide-based electrolyte, and a weight percentage of the sulfide-based electrolyte in the positive electrode electrolyte particle is 80-100wt%, optionally, 90-100wt%.

16. The positive electrode active layer composition according to any one of claims 1 to 15, wherein a mass ratio of the positive electrode electrolyte particle to the positive electrode active coated particle is 1-67%, optionally, 1-45%, further optionally, 5-25%.

17. The positive electrode active layer composition according to any one of claims 1 to 16, wherein the oxide positive electrode active substance comprises the lithium transition metal oxide;
optionally, the lithium transition metal oxide comprises one or more of a lithium cobaltate type positive electrode active substance, a high-nickel positive electrode active substance, a lithium-rich manganese-based positive electrode active substance, and a modification form of any one of the positive electrode active substances; and the modification form comprises one or more of doping modification and coating modification;
optionally,
the lithium cobalt oxide type positive electrode active substance comprises an element Li, an element Co, and an element O, in which, an atom molar ratio of the element Co to the element O is x2:2, and 0.9≤x2≤1; optionally, the lithium cobalt oxide type positive electrode active substance comprises the element Li, the element Co and the element O, in which, the atom molar ratio of the element Li to the element Co to the element O is 1:x2:2, and 0.9≤x2≤1;
the high-nickel positive electrode active substance comprises the element Li, the element Ni, and the element O, in which, the atom molar ratio of the element Ni to the element O is y2:2, and 0.6≤y2≤1; optionally, the high-nickel positive electrode active substance comprises the element Li, the element Ni and the element O, in which, the atom molar ratio of the element Li to the element Ni to the element O is 1:y2:2, and 0.6≤y2≤1, optionally, 0.8≤y2≤1;
the lithium-rich manganese-based positive electrode active substance comprises the element Li, the element Mn, and the element O, in which, the atom molar ratio of the element Li to the element Mn to the element O is (1+p):(p+r(1-p)):(2+p), and 0<p≤1, 0≤r≤1, optionally, 0.2≤p≤1.

18. The positive electrode active layer composition according to claim 17, wherein the lithium transition metal oxides meet one or more of the following characteristics:
the lithium cobalt oxide type positive electrode active substance comprises the lithium transition metal oxide with the chemical formula of LiCoₓ₂R₁₋ₓ₂O₂, in which, R is selected from one or more of Ni, Mg, Ti, Al, Cr, Nb, Fe, and O;
the high-nickel positive electrode active material comprises the lithium transition metal oxide with the chemical formula of LiNi_{y2}Co_{z2}D_{1-y2-z2}O₂, and 0≤z2≤0.4, 0.6≤(y2+z2)≤1, in which, D is selected from one or more of Mn, Al, Zr, Ti, Ce, Nb, Mo, Ta and W; and optionally, D includes the element M; and
the lithium-rich manganese-based positive electrode active substance comprises the lithium transition metal oxide with the chemical formula of pLi₂MnO₃·(1-p)LiZO₂, and Z is selected from one or more elements of Ni, Co, Mn, Cr, Fe, Al, Nb, Mo, and Ru.

19. The positive electrode active layer composition according to any one of claims 1 to 16, wherein the oxide positive electrode active substance comprises one or more selected from the group consisting of a lithium-cobalt oxide, a lithium-nickel oxide, a lithium-manganese oxide, a lithium-nickel-cobalt oxide, a lithium-manganese-cobalt oxide, a lithium-nickel-manganese oxide, a lithium-nickel-cobalt-manganese oxide, a lithium-nickel-cobalt-aluminum oxide, a lithium-rich manganese positive electrode active substance, and any one of above lithium transition metal oxides in modification forms; the lithium-rich manganese positive electrode active substance has a chemical formula of pLi₂MnO₃·(1-p)LiZO₂, wherein Z is one or more elements selected from the group consisting of Ni, Co, Mn, Cr, Fe, Al, Nb, Mo, and Ru, 0<p≤1; and the modification forms comprise one or more of doping modification and coating modification.

20. The positive electrode active layer composition according to any one of claims 1 to 19, wherein the Dᵥ50 or particle size of the positive electrode electrolyte particle is 1 nm - 20 µm; Dᵥ50 represents the particle size corresponding to the cumulative volume distribution of the multi-particle mixture reaching 50%, and the particle size refers to the maximum diameter of the particle in any direction.

21. The positive electrode active layer composition according to any of claim 20, wherein the Dᵥ50 of the positive electrode electrolyte particle is 50 nm - 5 µm.

22. The positive electrode active layer composition according to any one of claims 1 to 21, wherein the Dᵥ50 or particle size of the positive electrode active coated particle is 0.1-20 µm; and Dᵥ50 represents the particle size corresponding to the cumulative volume distribution of the multi-particle mixture reaching 50%.

23. The positive electrode active layer composition according to claim 22, wherein the Dᵥ50 of the positive electrode active coated particle is 1-10 µm.

24. A positive electrode active coated particle, being the positive electrode active coated particle in the positive electrode active layer composition according to any one of claims 1 to 23, wherein the second coating sub-layer comprises the sulfide electrolyte.

25. A positive electrode film, comprising a positive electrode current collector and a positive electrode active material layer located on at least one side of the positive electrode current collector, wherein the positive electrode active material layer comprises the positive electrode active layer composition according to any one of claims 1 to 23.

26. A positive electrode film, comprising a positive electrode current collector and a positive electrode active material layer located on at least one side of the positive electrode current collector, wherein the positive electrode active material layer comprises the positive electrode active coated particle according to claim 24.

27. The positive electrode film according to claim 25 or 26, wherein the positive electrode active material layer meets one or more of the following characteristics:
the weight percentage of the positive electrode active coated particle in the positive electrode active material layer is 70-99wt%, optionally, 80-95wt%; and
the weight percentage of the positive electrode electrolyte particle in the positive electrode active material layer is 0.1-30wt%, optionally, 5-20wt%.

28. The positive electrode film according to any one of claims 25 to 27, wherein the positive electrode active material layer further comprises one or both of a binder and a conductive agent;
optionally, the positive electrode film meets one or more of the following characteristics:
a weight percentage of the binder in the positive electrode active material layer is 0.1-5wt%; and
a weight percentage of the conducive agent in the positive electrode active material layer is 0.1-5wt%.

29. A solid-state battery, comprising a positive electrode layer, a solid electrolyte layer, and a negative electrode layer, wherein
the positive electrode layer comprises at least one of the positive electrode active layer composition according to any one of claims 1 to 23, the positive electrode active coated particle according to claim 24, and the positive electrode film according to any one of claims 25 to 28.

30. The solid-state battery according to claim 29, the solid-state battery being a sulfide solid-state battery.

31. The solid-state battery according to claim 29 or 30, the solid-state battery being a sulfide all-solid-state battery.

32. An electrical apparatus, comprising at least one of the positive electrode film according to any one of claims 25 to 28 and the solid-state battery according to any one of claims 29 to 31.

33. A use of the positive electrode active layer composition according to any one of claims 1 to 23, or the positive electrode active coated particle according to claim 24, or the positive electrode film according to any one of claims 25 to 28 in preparation of a solid-state battery; wherein
optionally, the solid-state battery is a sulfide solid-state battery; and
further optionally, the solid-state battery is a sulfide all-solid-state battery.
